# EUROPEAN PATENT APPLICATION

(11) **EP 4 513 951 A1**
(43) Date of publication of application: **26.02.2025**
(21) Application number: 23794934.2
(22) Date of filing: 30.03.2023
(51) Int. Cl.: H04W 28/02

(54) **COMMUNICATION METHOD AND COMMUNICATION APPARATUS**

(30) Priority: 29.04.2022 CN 202210468550
(71) Applicant: Huawei Technologies Co., Ltd., Shenzhen, Guangdong 518129 (CN)
(72) Inventor: SONG, Zhaohong, Shenzhen, Guangdong 518129 (CN)
(74) Representative: Isarpatent
(86) International application number: PCT/CN2023/084999
(87) International publication number: WO 2023/207499

(57) **Abstract**

This application discloses a communication method and a communication apparatus. A control network element first obtains real-time control capability information of a plurality of execution network elements, where the real-time control capability information indicates performance parameters used by the execution network element to implement various real-time control functions. Then, the control network element determines at least one target network element from the plurality of execution network elements based on the real-time control capability information of the execution network elements and real-time control capability information of the control network element. Each target network element and the control network element both support a real-time control function, or both support several same real-time control functions. In this way, real-time control information can be transmitted through a real-time control transmission channel established based on the control network element and the target network element, and each target network element can identify the real-time control transmission information. Therefore, a success rate of real-time control information transmission can be improved, and a real-time control processing capability of a base station system is improved.

## Description

### TECHNICAL FIELD

Embodiments of this application relate to the communication field, and in particular, to a communication method and a communication apparatus.

### BACKGROUND

Service processing functions of network elements in a wireless base station system include data processing and control processing. The control processing is classified into real-time control processing and non-real-time control processing based on timeliness requirements of processing completion. In the real-time control processing, the network element can respond to a request of an external event in time, complete processing the event within specified response time, and control coordinated running of all real-time tasks. If a specified time limit is exceeded, the data processing fails. In the non-real-time control processing, for a response to a request of an external event, if specified response time is exceeded, the data processing does not fail, but data processing performance is reduced. For the control processing between network elements, coordinated processing is completed by transferring control information. Control information transferred in the real-time control processing is real-time control information and has great impact on processing timeliness. Control information transferred in the non-real-time control processing is non-real-time control information and has little impact on the processing timeliness.

Generally, in the real-time control processing, network elements at various levels in the wireless base station system are classified into a control network element and an execution network element based on processing functions. Generally, the control network element can send real-time control information to the execution network element. When a real-time control function supported by the execution network element is the same as a real-time control function supported by the control network element, the execution network element can perform a corresponding real-time control function based on the real-time control information. However, when a real-time control function supported by the control network element is different from a real-time control function supported by the execution network element, or a performance parameter of a real-time control function supported by the control network element is different from a performance parameter of a real-time control function supported by the execution network element, the execution network element cannot identify the real-time control information. Consequently, the real-time control processing fails, and a real-time control processing capability of the base station system is affected.

### SUMMARY

This application provides a communication method and a communication apparatus, to improve a success rate of real-time control information transmission, and further improve a real-time control processing capability of a base station system.

According to a first aspect, this application provides a communication method. The method mainly relates to a control network element and an execution network element. In the method, the control network element first obtains real-time control capability information of a plurality of execution network elements managed by the control network element, where the real-time control capability information indicates performance parameters used by the execution network element to implement various real-time control functions. Then, the control network element determines at least one target network element from the plurality of execution network elements based on real-time control capability information of the control network element and the real-time control capability information of the plurality of execution network elements. Then, the control network element sends transmission channel configuration information to each of the at least one target network element, where the transmission channel configuration information is used to establish a real-time control transmission channel connecting the control network element and the target network element, and the real-time control transmission channel is used for transmission of real-time control information.

The control network element and each of the at least one target network element both support each real-time control function in a first function set, and the first function set includes at least one real-time control function. It should be understood that the first function set refers only to a range of the at least one real-time control function, and the at least one real-time control function is not necessarily implemented in a form of a set. In other words, the at least one real-time control function may be obtained without defining a set. It may also be understood that each of the at least one target network element and the control network element both support a real-time control function, or both support several same real-time control functions.

In this application, the control network element can collect the real-time control capability information of the plurality of execution network elements managed by the control network element, and select the at least one target network element based on a real-time control function indicated by the real-time control capability information of the control network element and a real-time control function indicated by the real-time control capability information of the execution network elements. The control network element and the target network element both support a real-time control function or several same real-time control functions. Then, the real-time control transmission channel is established based on the at least one target network element, to transmit the real-time control information. Because each of the at least one target network element and the control network element can support at least one same real-time control function, the real-time control information sent by the control network element in the real-time control transmission channel that is established by the at least one target network element and the control network element can be identified by the target network element in the real-time control transmission channel. Therefore, a success rate of real-time control information transmission can be improved, and a real-time control processing capability of a base station system is improved.

In a possible implementation, a non-empty intersection exists between a value of a performance parameter of a real-time control function indicated by the real-time control capability information of the control network element and a value of a performance parameter of the same real-time control function indicated by the real-time control capability information of the target network element.

In this implementation, a feature of the target network element determined by the control network element is proposed. To be specific, the control network element supports a real-time control function, and the target network element also supports the function. In addition, a value of a performance parameter used when the control network element supports the real-time control function is the same as that of a performance parameter used when the execution network element supports the real-time control function. Therefore, if the control network element is used to send information such as the performance parameter related to the real-time control function to the execution network element, the execution network element can identify the information such as the performance parameter related to the real-time control function. Therefore, the success rate of the real-time control information transmission can be improved, and the real-time control processing capability of the base station system is improved.

In a possible implementation, that the control network element determines the at least one target network element from the plurality of execution network elements based on the real-time control capability information of the plurality of execution network elements and the real-time control capability information of the control network element includes: When a non-empty intersection exists between a value of a performance parameter of a real-time control function indicated by the real-time control capability information of the control network element and a value of a performance parameter of the same real-time control function indicated by the real-time control capability information of the target network element, the control network element determines that the control network element and the execution network element both support the real-time control function, and the control network element determines the execution network element as the target network element.

In a possible implementation, the transmission channel configuration information includes a transmission resource of the real-time control transmission channel and/or a transmission rate of the real-time control transmission channel.

The transmission resource indicates a resource (for example, a transmission bandwidth resource on a hardware connection line between network elements) used for transmission of the real-time control information through the real-time control transmission channel that needs to be established. The transmission rate indicates a rate at which the real-time control information is transmitted through the real-time control transmission channel that needs to be established. The transmission rate is determined based on upper and lower limits of a transmission rate supported by the execution network element and upper and lower limits of a transmission rate supported by the control network element.

In this implementation, it is proposed that the control network element can configure the transmission resource before establishing the real-time control transmission channel. In comparison with a solution in which a transmission resource is fixedly configured in the conventional technology, in this implementation, in the control network element, the transmission resource can be flexibly configured based on the real-time control information, to improve resource utilization.

In a possible implementation, the real-time control capability information includes upper and lower limits of a transmission rate supported by the execution network element. Before the control network element sends the transmission channel configuration information to each of the at least one target network element, the method further includes: The control network element determines the transmission rate of the real-time control transmission channel based on the upper and lower limits of the transmission rate of the at least one target network element.

In this implementation, in comparison with a solution in which a transmission rate is fixedly configured in the conventional technology, in this implementation, the control network element may set, based on the upper and lower limits of the transmission rate supported by each execution network element, a transmission rate between the upper limit and the lower limit of the transmission rate of each network, so that congestion of some network elements can be avoided, to improve control information transmission efficiency.

In a possible implementation, the method further includes: The control network element determines function configuration information of each target network element based on the real-time control capability information of the at least one target network element, where the function configuration information is used to configure the real-time control functions in the first function set for the target network element. The control network element sends, to each target network element, the function configuration information corresponding to the target network element.

In this implementation, it is proposed that the control network element can configure the real-time control function for the target network element by using the function configuration information, so that each execution network element can enable or disable the real-time control function under an indication of the control network element. This helps ensure consistency between the real-time control function supported by the control network element and the real-time control function supported by the execution network element, to improve a probability that the execution network element accurately identifies information or an instruction from the control network element.

In a possible implementation, the function configuration information includes a performance parameter corresponding to the at least one real-time control function, and each real-time control function corresponds to at least one performance parameter and/or an index of the at least one performance parameter.

In this implementation, it is specified that the function configuration information mainly includes the performance parameter and/or the index of the performance parameter. Because the control network element sends a performance parameter used to implement a real-time control function to the target network element, the target network element can use the performance parameter in the configuration information when implementing the real-time control function. This helps keep the performance parameter used by the control network element for the real-time control function consistent with the performance parameter used by the execution network element for the real-time control function, to avoid a case in which the control network element and the execution network element cannot implement the real-time control function because the performance parameters of the real-time control function are inconsistent.

In a possible implementation, the method further includes: The control network element sends the real-time control information to the target network element, where the real-time control information includes a value of each performance parameter indicated by the function configuration information.

In a possible implementation, the method further includes: The control network element sends a transmission resource ratio to each target network element, where the transmission resource ratio indicates a ratio of a transmission resource occupied for transmitting the real-time control information to a transmission resource occupied for transmitting service data.

In this implementation, it is proposed that when the transmission resource is limited, the control network element may send the transmission resource ratio to each target network element, to reduce a quantity of transmission resources used for transmitting the service data, and reserve more transmission resources for transmitting the real-time control information.

In a possible implementation, the method further includes: The control network element obtains status information of the real-time control transmission channel, where the status information indicates a running status of the real-time control transmission channel. The control network element manages the real-time control transmission channel based on the status information.

In a possible implementation, the first function set includes at least one of the following: a function of real-time beam weight adjustment, a function of real-time subframe and/or symbol configuration adjustment, a function of real-time power control, a function of real-time intermediate radio frequency energy saving control, a function of real-time integrated access and backhaul IAB mode enabling, and a function of real-time channel calibration.

According to a second aspect, this application provides a communication method. In the method, an execution network element sends real-time control capability information of the execution network element to a control network element, where the real-time control capability information indicates performance parameters used by the execution network element to implement various real-time control functions. When the execution network element is determined as a target network element, the execution network element receives transmission channel configuration information from the control network element, where the transmission channel configuration information is used to establish a real-time control transmission channel connecting the control network element and the execution network element, the real-time control transmission channel is used for transmission of real-time control information, the control network element and the execution network element both support each real-time control function in a first function set, and the first function set includes at least one real-time control function.

In a possible implementation, a non-empty intersection exists between a value of a performance parameter of a real-time control function indicated by real-time control capability information of the control network element and a value of a performance parameter of the same real-time control function indicated by the real-time control capability information of the execution network element.

In a possible implementation, the transmission channel configuration information includes a transmission resource of the real-time control transmission channel and/or a transmission rate of the real-time control transmission channel.

In a possible implementation, the real-time control capability information includes upper and lower limits of a transmission rate supported by the execution network element, and the upper and lower limits of the transmission rate are used to determine the transmission rate of the real-time control transmission channel.

In a possible implementation, the method further includes: The execution network element receives, from the control network element, function configuration information corresponding to the execution network element, where the function configuration information is used to configure the real-time control functions in the first function set for the target network element.

In a possible implementation, the function configuration information includes a performance parameter corresponding to the at least one real-time control function, and each real-time control function corresponds to at least one performance parameter and/or an index of the at least one performance parameter.

In a possible implementation, the method further includes: The execution network element receives the real-time control information from the control network element, where the real-time control information includes a value of each performance parameter indicated by the function configuration information.

In a possible implementation, the method further includes: The execution network element receives a transmission resource ratio from the control network element, where the transmission resource ratio indicates a ratio of a transmission resource occupied for transmitting the real-time control information to a transmission resource occupied for transmitting service data.

In a possible implementation, the first function set includes at least one of the following: a function of real-time beam weight adjustment, a function of real-time subframe and/or symbol configuration adjustment, a function of real-time power control, a function of real-time intermediate radio frequency energy saving control, a function of real-time IAB mode enabling, and a function of real-time channel calibration.

It should be noted that there are a plurality of other implementations in embodiments of this application. For details, refer to the specific implementations of the first aspect and the beneficial effects of the first aspect. Details are not described herein again.

According to a third aspect, this application provides a control network element. The control network element includes a transceiver module and a processing module.

The transceiver module is configured to obtain real-time control capability information of a plurality of execution network elements managed by the control network element, where the real-time control capability information indicates performance parameters used by the execution network element to implement various real-time control functions. The processing module is configured to determine at least one target network element from the plurality of execution network elements based on the real-time control capability information of the plurality of execution network elements and real-time control capability information of the control network element, where each of the at least one target network element and the control network element both support each real-time control function in a first function set, and the first function set includes at least one real-time control function. The transceiver module is further configured to send transmission channel configuration information to each of the at least one target network element, where the transmission channel configuration information is used to establish a real-time control transmission channel connecting the control network element and the target network element, and the real-time control transmission channel is used for transmission of real-time control information.

In a possible implementation, a non-empty intersection exists between a value of a performance parameter of a real-time control function indicated by the real-time control capability information of the control network element and a value of a performance parameter of the same real-time control function indicated by the real-time control capability information of the target network element.

In a possible implementation, the transmission channel configuration information includes a transmission resource of the real-time control transmission channel and/or a transmission rate of the real-time control transmission channel.

In a possible implementation, the real-time control capability information includes upper and lower limits of a transmission rate supported by the execution network element. In addition, the processing module is further configured to determine the transmission rate of the real-time control transmission channel based on the upper and lower limits of the transmission rate of the at least one target network element.

In a possible implementation, the processing module is further configured to determine function configuration information of each target network element based on the real-time control capability information of the at least one target network element, where the function configuration information is used to configure the real-time control functions in the first function set for the target network element. The transceiver module is further configured to send, to each target network element, the function configuration information corresponding to the target network element.

In a possible implementation, the function configuration information includes a performance parameter corresponding to the at least one real-time control function, and each real-time control function corresponds to at least one performance parameter and/or an index of the at least one performance parameter.

In a possible implementation, the transceiver module is further configured to send the real-time control information to the target network element, where the real-time control information includes a value of each performance parameter indicated by the function configuration information.

In a possible implementation, the transceiver module is further configured to send a transmission resource ratio to each target network element, where the transmission resource ratio indicates a ratio of a transmission resource occupied for transmitting the real-time control information to a transmission resource occupied for transmitting the service data.

In a possible implementation, the transceiver module is further configured to obtain status information of the real-time control transmission channel, where the status information indicates a running status of the real-time control transmission channel. The processing module is further configured to manage the real-time control transmission channel based on the status information.

In a possible implementation, the first function set includes at least one of the following: a function of real-time beam weight adjustment, a function of real-time subframe and/or symbol configuration adjustment, a function of real-time power control, a function of real-time intermediate radio frequency energy saving control, a function of real-time integrated access and backhaul IAB mode enabling, and a function of real-time channel calibration.

It should be noted that there are a plurality of other implementations in embodiments of this application. For details, refer to the specific implementations of the first aspect and the beneficial effects of the first aspect. Details are not described herein again.

According to a fourth aspect, this application provides an execution network element. The execution network element includes a transceiver module and a processing module.

The transceiver module is configured to send real-time control capability information of the execution network element to a control network element, where the real-time control capability information indicates performance parameters used by the execution network element to implement various real-time control functions. The transceiver module is further configured to: when the execution network element is determined as a target network element, receive transmission channel configuration information from the control network element, where the transmission channel configuration information is used to establish a real-time control transmission channel connecting the control network element and the execution network element, the real-time control transmission channel is used for transmission of real-time control information, the control network element and the execution network element both support each real-time control function in a first function set, and the first function set includes at least one real-time control function.

In a possible implementation, a non-empty intersection exists between a value of a performance parameter of a real-time control function indicated by real-time control capability information of the control network element and a value of a performance parameter of the same real-time control function indicated by the real-time control capability information of the execution network element.

In a possible implementation, the transmission channel configuration information includes a transmission resource of the real-time control transmission channel and/or a transmission rate of the real-time control transmission channel.

In a possible implementation, the real-time control capability information includes upper and lower limits of a transmission rate supported by the execution network element, and the upper and lower limits of the transmission rate are used to determine the transmission rate of the real-time control transmission channel.

In a possible implementation, the transceiver module is further configured to receive, from the control network element, function configuration information corresponding to the execution network element, where the function configuration information is used to configure the real-time control functions in the first function set for the target network element.

In a possible implementation, the function configuration information includes a performance parameter corresponding to the at least one real-time control function, and each real-time control function corresponds to at least one performance parameter and/or an index of the at least one performance parameter.

In a possible implementation, the transceiver module is further configured to receive the real-time control information from the control network element, where the real-time control information includes a value of each performance parameter indicated by the function configuration information.

In a possible implementation, the transceiver module is further configured to receive a transmission resource ratio from the control network element, where the transmission resource ratio indicates a ratio of a transmission resource occupied for transmitting the real-time control information to a transmission resource occupied for transmitting service data.

In a possible implementation, the first function set includes at least one of the following: a function of real-time beam weight adjustment, a function of real-time subframe and/or symbol configuration adjustment, a function of real-time power control, a function of real-time intermediate radio frequency energy saving control, a function of real-time IAB mode enabling, and a function of real-time channel calibration.

It should be noted that there are a plurality of other implementations in embodiments of this application. For details, refer to the specific implementations of the first aspect and the beneficial effects of the first aspect. Details are not described herein again.

According to a fifth aspect, an embodiment of this application provides a communication apparatus. The communication apparatus may be the control network element in the foregoing implementations, or may be a chip or a functional module in the control network element. The communication apparatus may include a processing module and a transceiver module. When the communication apparatus is the control network element, the processing module may be a processor, and the transceiver module may be a transceiver. The control network element may further include a storage module, and the storage module may be a memory. The storage module is configured to store instructions, and the processing module executes the instructions stored in the storage module, so that the control network element performs the method according to any one of the first aspect or the implementations of the first aspect. When the communication apparatus is a chip in the control network element, the processing module may be a processor, and the transceiver module may be an input/output interface, a pin, a circuit, or the like. The processing module executes instructions stored in a storage module, so that the control network element performs the method according to any one of the first aspect or the implementations of the first aspect. The storage module may be a storage module (for example, a register or a cache) in the chip, or may be a storage module (for example, a read-only memory or a random access memory) that is in the control network element and that is located outside the chip.

According to a sixth aspect, an embodiment of this application provides a communication apparatus. The communication apparatus may be the execution network element in the foregoing implementations, or may be a chip or a functional module in the execution network element. The communication apparatus may include a processing module and a transceiver module. When the communication apparatus is the execution network element, the processing module may be a processor, and the transceiver module may be a transceiver. The execution network element may further include a storage module, and the storage module may be a memory. The storage module is configured to store instructions, and the processing module executes the instructions stored in the storage module, so that the execution network element performs the method according to any one of the second aspect or the implementations of the second aspect. When the communication apparatus is a chip in the execution network element, the processing module may be a processor, and the transceiver module may be an input/output interface, a pin, a circuit, or the like. The processing module executes instructions stored in a storage module, so that the execution network element performs the method according to any one of the second aspect or the implementations of the second aspect. The storage module may be a storage module (for example, a register or a cache) in the chip, or may be a storage module (for example, a read-only memory or a random access memory) that is in the execution network element and that is located outside the chip.

According to a seventh aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method described in any one of the first aspect, the second aspect, or the implementations of the foregoing aspects.

According to an eighth aspect, an embodiment of this application provides a computer program product including instructions. When the instructions are run on a computer, the computer is enabled to perform the method described in any one of the first aspect, the second aspect, or the implementations of the foregoing aspects.

According to a ninth aspect, an embodiment of this application provides a computer-readable storage medium, including instructions. When the instructions are run on a computer, the computer is enabled to perform the method described in any one of the first aspect, the second aspect, or the implementations of the foregoing aspects.

According to a tenth aspect, an embodiment of this application provides a communication system. The communication system includes the control network element according to any one of the first aspect and the implementations of the first aspect, and the execution network element according to any one of the second aspect and the implementations of the second aspect.

It can be learned from the foregoing technical solutions that embodiments of this application have the following advantages.

In this application, a control network element first obtains real-time control capability information of a plurality of execution network elements, where the real-time control capability information indicates performance parameters used by the execution network element to implement various real-time control functions. Then, the control network element determines at least one target network element from the plurality of execution network elements based on the real-time control capability information of the plurality of execution network elements and real-time control capability information of the control network element. Each of the at least one target network element and the control network element both support a real-time control function, or both support several same real-time control functions. In this way, real-time control information can be transmitted through a real-time control transmission channel established based on the control network element and the at least one target network element, and each target network element can identify the real-time control transmission information. Therefore, the success rate of the real-time control information transmission can be improved, and the real-time control processing capability of the base station system is improved.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application.
FIG. 1A is an example diagram of a networking structure of a base station system according to this application;
FIG. 1B is an example diagram of a fronthaul interface according to this application;
FIG. 1C is another example diagram of a networking structure of a base station system according to this application;
FIG. 1D is another example diagram of a networking structure of a base station system according to this application;
FIG. 2 is a flowchart of a communication method according to this application;
FIG. 3 is another flowchart of a communication method according to this application;
FIG. 4A is an example diagram of a real-time control message according to this application;
FIG. 4B is another example diagram of a real-time control message according to this application;
FIG. 5 is a schematic diagram of an embodiment of a communication apparatus according to this application; and
FIG. 6 is a schematic diagram of another embodiment of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

For ease of understanding, the following first describes a system architecture to which a communication method provided in this application is applicable.

The communication method provided in this application is mainly applicable to a base station system. The base station system may be a base station system based on a fourth generation mobile communication technology (the 4th generation mobile communication technology, 4G), a base station system based on a fifth generation mobile communication technology (the 5th generation mobile communication technology, 5G), or a base station system based on a sixth generation mobile communication technology (the 6th generation mobile communication technology, 6G). The communication method is even applicable to a base station system or a fronthaul network in a future communication network. This is not specifically limited herein.

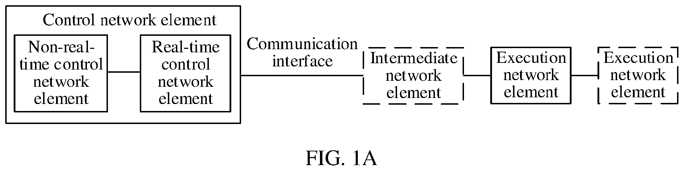

As shown in FIG. 1A, the base station system mainly includes a control network element and an execution network element. The control network element and the execution network element establish a communication connection through a communication interface. The control network element is a network element that controls service processing, and can collect information related to the execution network element from the execution network element through the communication interface, and send control information to the execution network element, to control the execution network element. The execution network element is a network element that executes corresponding service processing based on the control information sent by the control network element.

In addition, the communication interface between the control network element and the execution network element may be a transmission protocol interface based on a transmission interface such as a backplane bus, an optical fiber, a radio frequency cable, a coaxial cable, or a high-speed serial cable. For example, when the communication interface uses a transmission medium such as a backplane bus or an optical fiber, the communication interface may be an interface based on the common public radio interface (common public radio interface, CPRI) protocol, an interface based on the enhanced common public radio interface (enhanced common public radio interface, eCPRI) protocol, an interface based on the similar CPRI (Similar CPRI, sCPRI) protocol, or another fronthaul network interface. For example, when the communication interface uses a transmission medium such as a radio frequency cable, a coaxial cable, or a high-speed serial cable, the communication interface may be an interface based on the antenna interface standards group (antenna interface standards group, AISG) protocol or an interface based on the Ethernet protocol. This is not specifically limited herein.

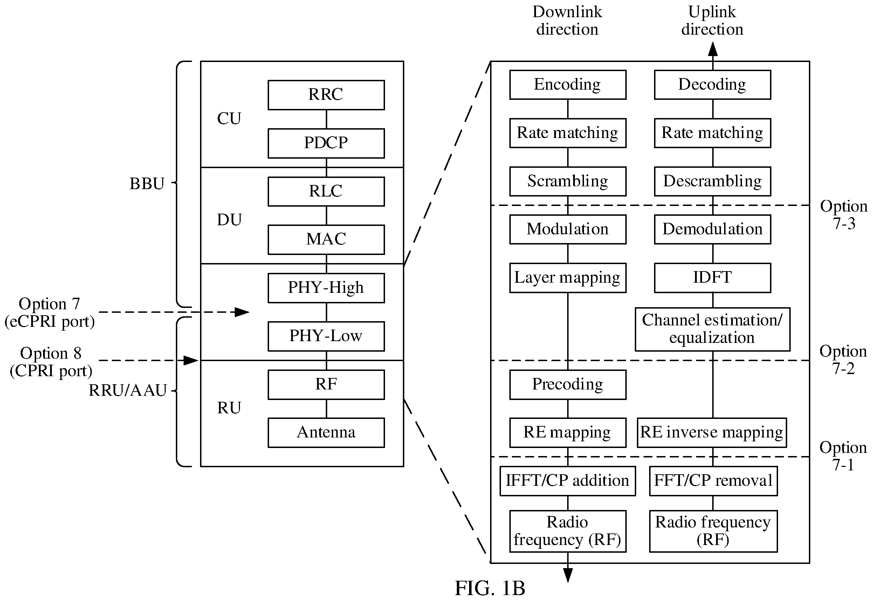

Optionally, an intermediate network element is further included between the control network element and the execution network element. The intermediate network element is configured to connect the control network element and the execution network element, and forward signaling between the control network element and the execution network element. Optionally, the intermediate network element may further implement an interface conversion function. Specifically, when the execution network element and the control network element respectively support different communication interfaces, the intermediate network element can implement interface protocol conversion, so that the control network element and the execution network element that use different interface protocols can communicate with each other. For example, as shown in FIG. 1B, when the control network element supports a function above an interface based on the eCPRI protocol (for example, a function above a high physical layer (PHY-High)), and the execution network element supports a function below an interface based on the CPRI protocol (for example, a function below a radio frequency function), the intermediate network element connecting the control network element and the execution network element may have various functions (for example, precoding, resource element (resource element, RE) mapping, and RE inverse mapping) of a low physical layer (PHY-Low), so that the control network element supporting the eCPRI protocol and the execution network element supporting the CPRI protocol can communicate with each other.

Specifically, the control network element may include a non-real-time control network element and a real-time control network element. The non-real-time control network element may be connected to at least one real-time control network element (FIG. 1A shows only one real-time control network element), and the real-time control network element can be connected to at least one execution network element (FIG. 1A shows only one execution network element connected to the real-time control network element). Optionally, one execution network element may also be connected to another execution network element.

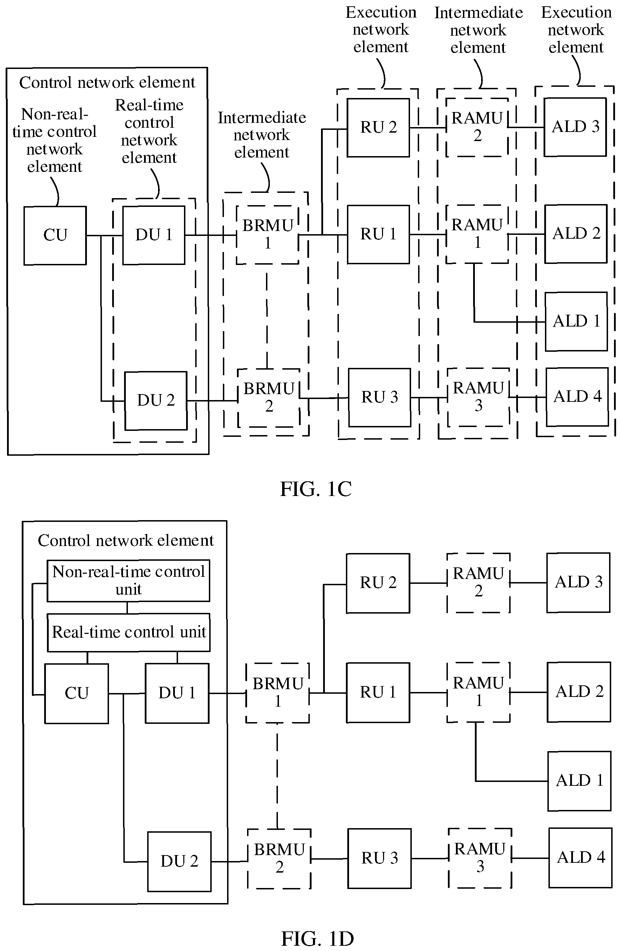

The non-real-time control network element is a network element configured to perform non-real-time control processing in the base station system, and is configured to configure, for the real-time control network element and/or the execution network element, a command or a parameter used in a real-time control processing process. Specifically, the non-real-time control network element may be a network element that supports a non-real-time wireless upper-layer protocol stack function. For example, as shown in FIG. 1C, the non-real-time control network element may be a central unit (central unit, CU) in a conventional base station system. For example, as shown in FIG. 1D, the non-real-time control network element may be a non-real-time control unit that is independent of a CU in the conventional technology and that can implement a function of the non-real-time control network element, or may be a network element implemented by combining the CU in the conventional technology and the non-real-time control unit. Optionally, the non-real-time control network element may further have a part of a baseband processing function. In this case, the non-real-time control network element may be a baseband unit (baseband unit, BBU).

The real-time control network element is a network element configured to perform real-time control processing in the base station system, and is configured to control, based on the command or the parameter configured by the non-real-time control network element, the execution network element to perform a real-time control function. Specifically, the real-time control network element is a network element or device having a baseband signal processing function, or a device having a radio signal processing function for managing a radio access network (radio access network, RAN). The real-time control network element can complete the baseband signal processing function such as encoding, multiplexing, modulation, and spreading, can complete a function of processing signaling from the execution network element (for example, a radio unit or an antenna device), and can implement a function of performing local management and remote operation and maintenance on the execution network element. Optionally, the real-time control network element is a layer 2 function network element that processes a physical layer function and a timeliness requirement. For example, as shown in FIG. 1C, the real-time control network element may be a distributed unit (distributed unit, DU). For example, as shown in FIG. 1D, the real-time control network element may be a real-time control unit that is independent of a DU in the conventional technology and that can implement a function of the real-time control network element, or may be a network element implemented by combining the DU in the conventional technology and the real-time control unit. In addition, the real-time control network element may alternatively be a baseband unit BBU.

In addition, the execution network element is a network element that executes a real-time control service in the base station system. The execution network element may receive real-time control information from the real-time control network element, and then perform corresponding real-time control service processing based on the real-time control information. Specifically, the execution network element may be a network element that processes a service related to a radio signal (for example, an intermediate frequency signal or a radio frequency signal), for example, a radio unit (radio unit, RU), a remote radio unit (remote radio unit, RRU), or a remote radio head (remote radio head, RRH). Alternatively, the execution network element may be an antenna device connected to the network element that processes an intermediate radio frequency service, for example, an antenna line device (antenna line device, ALD) (which is also referred to as an antenna linear device). In addition, the execution network element may alternatively be a combination of the radio unit and the antenna device. For example, in a 5G NR system, the execution network element may alternatively be an active antenna unit (active antenna unit, AAU), that is, a processing unit that integrates the RRU (or the RRH) and the antenna device.

It should be understood that the intermediate network element may be configured to connect the real-time control network element and the execution network element, or may be configured to connect an execution network element and another execution network element. For example, if the real-time control network element is a baseband unit, and the execution network element is a radio unit, the intermediate network element may be an intermediate unit (baseband radio middle unit, BRMU) (for example, a baseband gateway, a remote radio unit hub RRU HUB, and various extended network elements) connecting the baseband unit and the radio unit. If the execution network element is a radio unit, and the antenna device is another execution network element that needs to be connected to the radio unit, the intermediate network element may alternatively be an intermediate unit (radio antenna middle unit, RAMU) connecting the radio unit and the antenna device. It should be understood that, when the intermediate network element is a BRMU, the intermediate network element may have some functions of the connected baseband unit (for example, a DU or a BBU) or radio unit (for example, an RU or an RRU), to facilitate interconnection between the baseband unit and the radio unit that have different performance parameters (for example, a device version, a device interface, or a protocol version) on both sides. When the intermediate network element is a RAMU, the intermediate network element may have some functions of the connected radio unit (for example, an RU or an RRU) or antenna device (for example, an ALD), to facilitate interconnection between the radio unit and the antenna device that have different performance parameters (for example, a device version, a device interface, or a protocol version) on both sides.

As shown in 1C, a 5G wireless base station system is used as an example. If a CU is a non-real-time control network element and a DU is a real-time control network element, the CU may be connected to at least one DU through a backplane bus or an optical fiber. For example, the CU is separately connected to a DU 1 and a DU 2. If an RU and an ALD are execution network elements, one DU may be connected to at least one RU, and one RU may be connected to at least one ALD. For example, the DU 1 may be connected to both an RU 1 and a RU2, and the DU 2 may be connected to an RU 3. For example, the RU 1 may be connected to both an ALD 1 and an ALD 2, the RU 2 may be connected to an ALD 3, and the RU 3 may be connected to an ALD 4. If a BRMU is an intermediate network element, the DU may be connected to the RU through the BRMU. For example, the DU 1 may be connected to both the RU 1 and the RU 2 through a BRMU 1, and the DU 2 may be connected to the RU 3 through a BRMU 2. In addition, when the BRMU 1 and the BRMU 2 are integrated, the DU 1 and the DU 2 may also share a same BRMU. If a RAMU is an intermediate network element, the RU may be connected to the ALD through the RAMU. For example, the RU 1 may be connected to both the ALD 1 and the ALD 2 through a RAMU 1, the RU 2 may be connected to the ALD 3 through a RAMU 2, and the RU 3 may be connected to the ALD 4 through a RAMU 3.

It should be understood that, in actual application, there may be other implementations of the control network element and the execution network element. This is not specifically limited herein. In this application, the control network element and the execution network element are first used as an example for description.

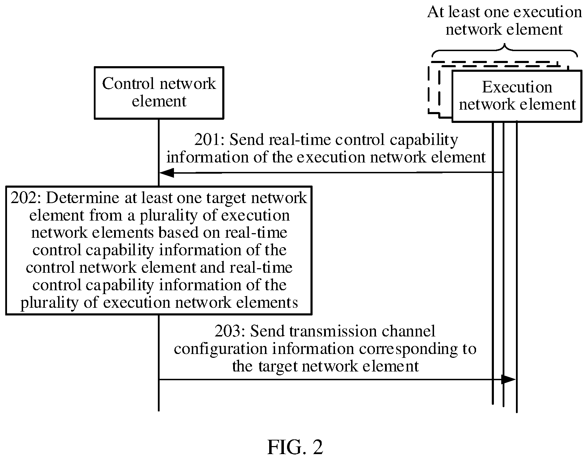

The following describes a main procedure of the communication method provided in this application with reference to FIG. 2. The method mainly relates to the control network element and the execution network element described in FIG. 1A, FIG. 1C, or FIG. 1D. The network elements respectively perform the following steps.

Step 201: The execution network element sends real-time control capability information of the execution network element to the control network element; and correspondingly, the control network element receives the real-time control capability information of the execution network element from the execution network element.

The real-time control capability information indicates a real-time control capability of a network element. The real-time control capability of the network element may be a capability of the network element to support a real-time control function, or a capability of the network element to respond to a real-time control function. The real-time control capability of the network element may be specifically a capability of the network element to perform real-time control on another network element, or may be specifically a capability of the network element to be controlled by another network element in real time. For example, if the network element is the control network element, that the control network element has a capability to support real-time control indicates that the control network element can perform the real-time control on another network element (for example, the execution network element). If the network element is the execution network element, that the execution network element has a capability to support real-time control indicates that the real-time control can be performed on the execution network element by another network element (for example, the control network element).

It should be noted that, if two network elements that exchange signaling support a real-time control function, protocol layers related to a process of processing the signaling (for example, a real-time control message to be described below) by the two network elements match each other. For ease of description, the two network elements that exchange signaling are referred to as a message sender and a message receiver respectively. When the message sender is a control network element, the message receiver may be an execution network element. When the message sender is an execution network element, the message receiver may be a control network element. When the message sender is an execution network element, the message receiver may alternatively be another execution network element or an intermediate network element. This is not specifically limited herein. For example, the message sender generates control information at a link layer, and encodes and transmits the control information at a physical layer. The message receiver receives and parses the control information at a protocol physical layer, and then feeds back the control information to a data link layer for processing. For example, both the message sender and the message receiver are at a same layer, that is, both sending processing and receiving processing are performed at the same layer. For example, steps such as message sending and receiving and parsing and processing are completed at the data link layer or the physical layer. For example, only one of the message sender and the message receiver relates to a plurality of protocol layers, and the other party performs processing at only one protocol layer. For example, the message sender constructs a message at the link layer, and encodes and transmits the message at the physical layer, and the message receiver receives, parses, and processes the message at the physical layer. Alternatively, the message sender constructs, encodes, and transmits a message at a physical layer, and the message receiver receives and parses the message at the physical layer, and then feeds back the message to the link layer for processing. It should be understood that, in addition to the data link layer and the physical layer described above, same-layer or cross-layer processing at another standard network layer in an open system interconnection reference model (open system interconnection reference model, OSI) is similar to this. Details are not described herein. In addition to a function that needs to be processed based on an upper-layer protocol, based on a requirement for a real-time control processing function, a message with a higher timeliness requirement is parsed and processed at a lower layer, and a message with a highest timeliness requirement is parsed, processed, and controlled at the protocol physical layer.

Specifically, the real-time control capability information indicates performance parameters used by the execution network element to implement various real-time control functions. In other words, the real-time control capability information can indicate performance parameters of a plurality of real-time control functions of one execution network element.

The real-time control function refers to a function of processing an event that needs to be completed within specified response time. For example, the real-time control function may be a function of real-time beam weight adjustment, a function of real-time subframe and/or symbol configuration adjustment, a function of real-time power control, a function of real-time intermediate radio frequency energy saving control, a function of real-time integrated access and backhaul (integrated access and backhaul, IAB) mode enabling, and a function of real-time channel calibration. The function of real-time power control may be a function of real-time power sharing or a function of real-time power back-off. The function of real-time intermediate radio frequency energy saving control may be a function of intermediate radio frequency channel shutdown, a function of real-time symbol shutdown, a function of real-time subcarrier shutdown, or the like.

The performance parameter of the real-time control function refers to a parameter used by the execution network element to implement the real-time control function. Generally, a plurality of performance parameters may be needed to implement one real-time control function. For ease of understanding, that the real-time control function is the function of real-time beam weight adjustment is used as an example. Performance parameters of the function of real-time beam weight adjustment include a quantity of channels, a quantity of phase shifters, a quantity of symbol switching times, a phase shifter weight, and the like. The function of real-time power control is used as an example. Performance parameters of the function of real-time power control include a channel power adjustment step, maximum radio frequency power of a channel, a quantity of channels, and the like.

It should be understood that, if a plurality of performance parameters need to be used to implement one real-time control function, and the plurality of performance parameters that need to be used for the real-time control function are considered as a group of performance parameters, the real-time control capability information includes a plurality of groups of performance parameters, and each group of performance parameters corresponds to one real-time control function. For example, if the real-time control capability information includes performance parameters for implementing two real-time control functions by an execution network element, the real-time control capability information includes a first group of performance parameters of a first real-time control function of the execution network element and a second group of performance parameters of a second real-time control function of the execution network element.

Specifically, the control network element can receive the real-time control capability information of each execution network element from the plurality of execution network elements. It should be understood that, when an intermediate network element further exists between the control network element and the execution network element, the execution network element may first send the real-time control capability information of the execution network element to the intermediate network element, and then the intermediate network element forwards the real-time control capability information of the execution network element to the control network element. In this case, the control network element receives the real-time control capability information of the execution network element from the intermediate network element.

Step 202: The control network element determines at least one target network element from the plurality of execution network elements based on real-time control capability information of the control network element and the real-time control capability information of the plurality of execution network elements.

Each of the at least one target network element and the control network element both support each real-time control function in a first function set, and the first function set includes at least one real-time control function. It should be understood that the first function set refers only to a range of the at least one real-time control function, and the at least one real-time control function is not necessarily implemented in a form of a set. In other words, the at least one real-time control function may be obtained without defining a set.

It may be understood that the at least one target network element selected by the control network element and the control network element support a same real-time control function. In addition, the at least one target network element and the control network element may both support one real-time control function, or may both support several real-time control functions. For example, if the at least one target network element selected by the control network element includes a target network element 1 and a target network element 2, the control network element, the target network element 1, and the target network element 2 all support a real-time control function 1; the control network element, the target network element 1, and the target network element 2 all support a real-time control function 2; or the control network element, the target network element 1, and the target network element 2 all support a real-time control function 1 and a real-time control function 2.

For example, the first function set includes at least one of the following: the function of real-time beam weight adjustment, the function of real-time subframe and/or symbol configuration adjustment, the function of real-time power control, the function of real-time intermediate radio frequency energy saving control, the function of real-time integrated access and backhaul IAB mode enabling, and the function of real-time channel calibration.

Specifically, the control network element determines the at least one target network element based on a performance parameter indicated by the real-time control capability information of the control network element and a performance parameter indicated by the real-time control capability information of the execution network element.

In a possible implementation, the control network element compares the performance parameter of the control network element with performance parameters of the plurality of execution network elements. When a non-empty intersection exists between a value of a performance parameter of a real-time control function indicated by the real-time control capability information of the control network element and a value of a performance parameter of the same real-time control function indicated by the real-time control capability information of the execution network element, the control network element determines the execution network element as the target network element.

For example, when a non-empty intersection exists between a value of a performance parameter of a first real-time control function indicated by the real-time control capability information of the control network element and a value of a performance parameter of a first real-time control function indicated by real-time control capability information of a first execution network element, the control network element determines that the first execution network element supports the first real-time control function, and further determines the first execution network element as the target network element.

For ease of understanding, the function of real-time beam weight adjustment is used as an example. Performance parameters of the function of real-time beam weight adjustment indicated by the real-time control capability information of the control network element include: a quantity of channels, where 16 channels, 32 channels, and 64 channels are supported; a quantity of phase shifters, where eight phase shifters, 16 phase shifters, and 64 phase shifters are supported; a quantity of symbol switching times: 1, 2, or 4; and a phase shifter weight, which is a single phase shifter weight (4 bits) x the quantity of phase shifters. Performance parameters of the function of real-time beam weight adjustment indicated by real-time control capability information of an execution network element 1 include: a quantity of channels, where eight channels, 16 channels, and 32 channels are supported; a quantity of phase shifters, where eight phase shifters, 16 phase shifters, and 32 phase shifters are supported; a quantity of symbol switching times: 4; and a phase shifter weight, which is a single phase shifter weight (4 bits) x the quantity of phase shifters. Performance parameters of the function of real-time beam weight adjustment indicated by real-time control capability information of an execution network element 2 include: a quantity of channels, where eight channels are supported; a quantity of phase shifters, where eight phase shifters, 16 phase shifters, and 32 phase shifters are supported; a quantity of symbol switching times: 1; and a phase shifter weight, which is a single phase shifter weight (4 bits) x the quantity of phase shifters. The control network element and the execution network element 1 can both support 16 channels and 32 channels, can both support eight phase shifters or 16 phase shifters, and can both support one time of symbol switching. Therefore, the control network element may determine the execution network element 1 as the target network element. Because no intersection exists between the quantity of channels supported by the control network element and the quantity of channels supported by the execution network element 2, the control network element may not determine the execution network element 2 as the target network element.

In addition, the function of real-time power control is used as an example. Performance parameters of the function of real-time power control indicated by the real-time control capability information of the control network element include: a channel power adjustment step of 1 dB or 10 dB; and maximum radio frequency power of a channel, where three values: 10 W, 20 W, and 40 W are supported. Performance parameters of the function of real-time power control indicated by real-time control capability information of an execution network element 3 include: a channel power adjustment step of 1 dB; and maximum radio frequency power of a channel, where three values: 20 W, 40 W, and 60 W are supported. The control network element and the execution network element 3 can both support maximum radio frequency power, of 20 W and 40 W, of the channel, and can both support the channel power adjustment step of 1 dB. Therefore, the control network element may determine the execution network element 3 as the target network element.

By analogy, the control network element may filter the plurality of execution network elements based on the plurality of real-time control functions indicated by the real-time control information, and finally determine the at least one target network element.

Step 203: The control network element sends transmission channel configuration information corresponding to the target network element to the execution network element.

The transmission channel configuration information is used to establish a real-time control transmission channel connecting the control network element and the target network element, and the real-time control transmission channel is used for transmission of real-time control information. After the control network element selects the target network element, the control network element configures the transmission channel configuration information for the target network element, so that the target network element can establish the real-time control transmission channel with the control network element.

In a possible implementation, the transmission channel configuration information includes a transmission resource of the real-time control transmission channel and/or a transmission rate of the real-time control transmission channel.

The transmission resource indicates a resource (for example, a transmission bandwidth resource on a hardware connection line between network elements) used for transmission of the real-time control information through the real-time control transmission channel that needs to be established. It should be understood that, when allocating a transmission resource, the control network element preferentially ensures a quantity of transmission resources that can be allocated to the control transmission channel, and then considers a quantity of transmission resources for another channel. In addition, when allocating the transmission resource to the control transmission channel, the control network element preferentially ensures a quantity of transmission resources that can be allocated to a real-time control transmission channel, and then considers a quantity of transmission resources for a non-real-time control transmission channel.

In comparison with a solution in which a transmission resource is fixedly configured in the conventional technology, in this application, in the control network element, the transmission resource can be flexibly configured based on the real-time control information, to improve resource utilization.

In addition, the transmission rate indicates a rate at which the real-time control information is transmitted through the real-time control transmission channel that needs to be established. It should be understood that the real-time control capability information includes upper and lower limits of a transmission rate supported by the execution network element and the control network element. Therefore, the control network element can determine the transmission rate of the real-time control transmission channel based on the upper and lower limits of the transmission rate of the at least two target network elements.

In comparison with a solution in which a transmission rate is fixedly configured in the conventional technology, in this application, the control network element may set, based on the upper and lower limits of the transmission rate supported by each execution network element, a transmission rate between the upper limit and the lower limit of the transmission rate of each network, so that congestion of some network elements can be avoided, to improve control information transmission efficiency.

Optionally, the transmission channel configuration information further includes address information of an upstream network element and/or a downstream network element corresponding to the target network element that receives the transmission channel configuration information. The upstream network element refers to a network device in which a previous hop of the target network element is located, and the downstream network element refers to a network device in which a next hop of the target network element is located. It should be understood that different target network elements correspond to different upstream network elements, and different target network elements correspond to different downstream network elements. It should be understood that, for a target network element, transmission channel configuration information corresponding to the target network element may include only address information of an upstream network element, and does not include address information of a downstream network element; transmission channel configuration information corresponding to the target network element includes only address information of a downstream network element, and does not include address information of an upstream network element; or transmission channel configuration information corresponding to the target network element includes address information of an upstream network element and address information of a downstream network element.

For example, target network elements determined by the control network element are the execution network element 1 and the execution network element 2, the control network element is connected to the execution network element 1 through an intermediate network element 1, and the execution network element 2 is directly connected to the execution network element 1. In this case, address information of an upstream network element in transmission channel configuration information sent by the control network element to the execution network element 1 is address information of the intermediate network element 1, and address information of a downstream network element is address information of the execution network element 2. Address information of an upstream network element in transmission channel configuration information sent by the control network element to the execution network element 2 is address information of the execution network element 1.

Optionally, when the upstream network element or the downstream network element of the target network element is an intermediate network element, the control network element further needs to configure address information of the target network element for the upstream network element or the downstream network element. For example, in the foregoing example, because the intermediate network element 1 is configured to connect the control network element and the execution network element 1, the control network element not only needs to indicate, to the execution network element 1 by using the transmission channel configuration information, that the upstream network element of the execution network element 1 is the intermediate network element 1, but also needs to send the address information of the execution network element 1 to the intermediate network element 1. In this way, when the intermediate network element 1 receives control information or other signaling, the intermediate network element 1 can learn that the control information or the other signaling is to be transmitted to the execution network element 1.

Optionally, the address information of the upstream network element includes a communication address and a communication port of the upstream network element, and the address information of the downstream network element includes a communication address and a communication port of the downstream network element.

After the target network element receives the transmission channel configuration information from the control network element, the target network element can learn of an address of the control network element that needs to establish the real-time control transmission channel with the target network element. In addition, the control network element can also learn of an address of the target network element that needs to establish the real-time control transmission channel with the target network element. Therefore, the control network element and the target network element can establish the real-time control transmission channel based on address information of a peer network element, to transmit the real-time control information and implement a real-time control service. Specifically, for an implementation in which the control network element transmits the real-time control information to the target network element, refer to related descriptions in the following step 306.

In this embodiment, the control network element first obtains the real-time control capability information of the plurality of execution network elements, where the real-time control capability information indicates the performance parameters used by the execution network element to implement various real-time control functions. Then, the control network element determines the at least one target network element from the plurality of execution network elements based on the real-time control capability information of the plurality of execution network elements and the real-time control capability information of the control network element. Each of the at least one target network element and the control network element both support a real-time control function or several same real-time control functions. In this way, the real-time control information can be transmitted through the real-time control transmission channel established based on the control network element and the at least one target network element, and each target network element can identify the real-time control transmission information. Therefore, a success rate of real-time control information transmission can be improved, and a real-time control processing capability of a base station system is improved.

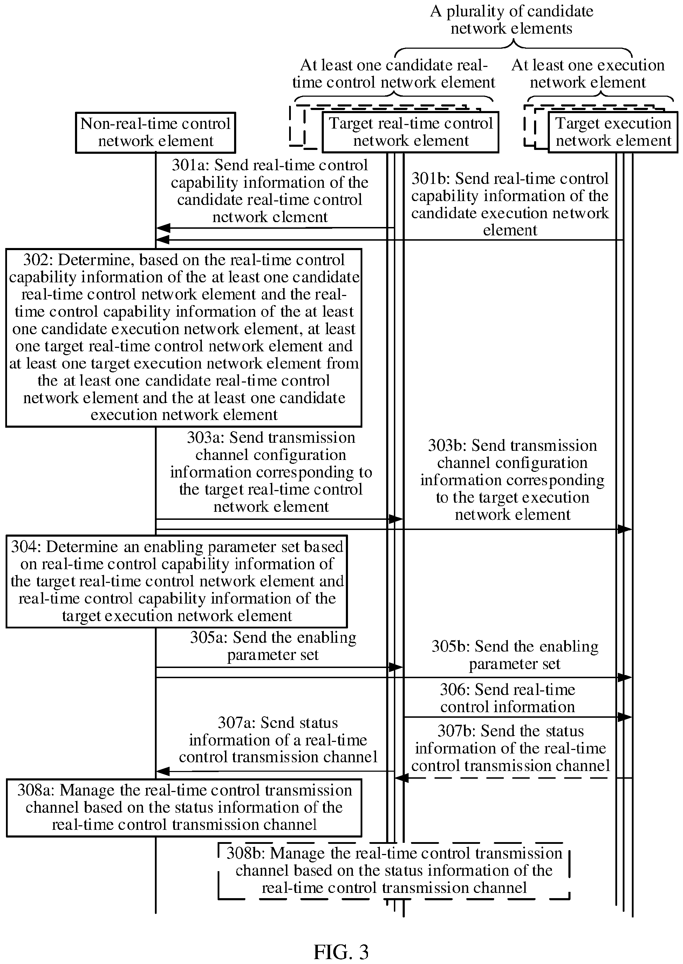

The following further describes the communication method provided in this application with reference to FIG. 3. In an embodiment corresponding to FIG. 3, the foregoing control network element includes a non-real-time control network element and a real-time control network element, and the non-real-time control network element, the real-time control network element, and an execution network element respectively perform the following steps.

Step 301a: A candidate real-time control network element sends real-time control capability information of the candidate real-time control network element to a non-real-time control network element; and correspondingly, the non-real-time control network element receives the real-time control capability information of the candidate real-time control network element from the candidate real-time control network element.

Step 301b: A candidate execution network element sends real-time control capability information of the candidate execution network element to the non-real-time control network element; and correspondingly, the non-real-time control network element receives the real-time control capability information of the candidate execution network element from the candidate execution network element.

The real-time control capability information indicates performance parameters used by the candidate network element to implement various real-time control functions. For detailed descriptions of the real-time control capability information, the real-time control functions, and the performance parameters of the real-time control functions, refer to the foregoing step 201. Details are not described herein again.

In this embodiment, the non-real-time control network element can obtain the real-time control capability information from a plurality of candidate network elements, where the plurality of candidate network elements include at least one candidate real-time control network element and at least one candidate execution network element managed by the candidate real-time control network element. It should be understood that a quantity of candidate real-time control network elements that are included in the plurality of candidate network elements and a quantity of candidate execution network elements are related to a network topology. FIG. 1C is used as an example. If a CU is a non-real-time control network element, the CU can manage a DU 1 and a DU 2. In this case, the DU 1 and the DU 2 may be candidate real-time control network elements. Because the DU 1 can manage an RU 1, an RU 2, an ALD 1, an ALD 2, and an ALD 3, the RU 1, the RU 2, the ALD 1, the ALD 2, and the ALD 3 may be candidate execution network elements. Because the DU 2 can manage an RU 3 and an ALD 4, the RU 3 and the ALD 4 may be candidate execution network elements.

It should be understood that the non-real-time control network element may separately obtain the real-time control capability information of the candidate real-time control network element from the candidate real-time control network element, and obtain the real-time control capability information of the candidate execution network element from the candidate execution network element. For example, the candidate real-time control network element and the candidate execution network element may respectively report the real-time control capability information to the non-real-time control network element. In addition, the non-real-time control network element may alternatively directly obtain the real-time control capability information of the candidate real-time control network element and the real-time control capability information of the candidate execution network element from the candidate real-time control network element. For example, the candidate execution network element reports the real-time control capability information to the candidate real-time control network element, and then the candidate real-time control network element reports the real-time control capability information of the candidate real-time control network element and the real-time control capability information of the candidate execution network element to the non-real-time control network element. A manner in which the non-real-time control network element obtains the real-time control capability information of each candidate network element is not limited in this application.

It should be further understood that, if an intermediate network element exists between the candidate real-time control network element and the candidate execution network element, or an intermediate network element exists between two candidate execution network elements, the real-time control capability information reported by each execution network element to the non-real-time control network element further passes through at least one intermediate network element. For details, refer to related descriptions in the foregoing step 201. Details are not described herein again.

It should be understood that, when the non-real-time control network element directly obtains the real-time control capability information from the candidate real-time control network element and from the candidate execution network element respectively, there is no definite limitation on a time sequence of step 301a and step 301b. To be specific, the non-real-time control network element may first perform step 301a and then perform step 301b, may first perform step 301b and then perform step 301a, or may simultaneously perform step 301a and step 301b. This is not specifically limited herein.

Step 302: The non-real-time control network element determines, based on the real-time control capability information of the at least one candidate real-time control network element and the real-time control capability information of the at least one candidate execution network element, at least one target real-time control network element and at least one target execution network element from the at least one candidate real-time control network element and the at least one candidate execution network element.

Specifically, the non-real-time control network element can determine at least two target network elements from the at least one candidate real-time control network element and the at least one candidate execution network element, where the at least two target network elements include the at least one target real-time control network element and the at least one target execution network element. Each of the at least two target network elements supports each real-time control function in a first function set, and the first function set includes at least one real-time control function. The first function set includes at least one of the following: a function of real-time beam weight adjustment, a function of real-time subframe and/or symbol configuration adjustment, a function of real-time power control, a function of real-time intermediate radio frequency energy saving control, a function of real-time integrated access and backhaul IAB mode enabling, and a function of real-time channel calibration. For detailed descriptions of the first function set, refer to the foregoing step 202. Details are not described herein again.

It may be understood that the at least two target network elements selected by the non-real-time control network element support a same real-time control function, and the at least two target network elements may all support a plurality of same real-time control functions. For example, if the at least two target network elements selected by the non-real-time control network element include a target real-time control network element 1, a target execution network element 1, and a target execution network element 2, the target real-time control network element 1, the target execution network element 1, and the target execution network element 2 all support a real-time control function 1; the target real-time control network element 1, the target execution network element 1, and the target execution network element 2 all support a real-time control function 2; or the target real-time control network element 1, the target execution network element 1, and the target execution network element 2 all support a real-time control function 1 and a real-time control function 2.

Specifically, the non-real-time control network element determines the at least two target network elements based on a performance parameter indicated by the real-time control capability information of the candidate real-time control network element and a performance parameter indicated by the real-time control capability information of the candidate execution network element.

In a possible implementation, the non-real-time control network element compares the performance parameter of the candidate real-time control network element with the performance parameter of the candidate execution network element. When a non-empty intersection exists between a value of a performance parameter of a real-time control function indicated by the real-time control capability information of the candidate real-time control network element and a value of a performance parameter of the same real-time control function indicated by the real-time control capability information of the candidate execution network element, the non-real-time control network element determines the candidate real-time control network element as the target real-time control network element, and determines the candidate execution network element as the target execution network element.

For example, when a non-empty intersection exists between a value of a performance parameter of a first real-time control function indicated by real-time control capability information of a first candidate real-time control network element and a value of a performance parameter of the first real-time control function indicated by real-time control capability information of a first candidate execution network element, the non-real-time control network element determines that the first candidate real-time control network element and the first candidate execution network element both support the first real-time control function, further determines the first candidate real-time control network element as the target real-time control network element, and determines the first candidate execution network element as the target execution network element. For details, refer to detailed examples in the foregoing step 202. Details are not described herein again.

After the non-real-time control network element selects the target real-time control network element and the target execution network element, the non-real-time control network element configures transmission channel configuration information for the target real-time control network element and the target execution network element, so that the target real-time control network element and the target execution network element establish a real-time control transmission channel based on the transmission channel configuration information. Specifically, the non-real-time control network element separately configures the transmission channel configuration information for the target real-time control network element and the target execution network element through step 303a and step 303b.

Step 303a: The non-real-time control network element sends, to the target real-time control network element, the transmission channel configuration information corresponding to the target real-time control network element.

Step 303b: The non-real-time control network element sends, to the target execution network element, the transmission channel configuration information corresponding to the target execution network element.

It should be understood that there is no definite limitation on a time sequence of step 303a and step 303b. To be specific, the non-real-time control network element may first perform step 303a and then perform step 303b, may first perform step 303b and then perform step 303a, or may simultaneously perform step 303a and step 303b. This is not specifically limited herein.

The transmission channel configuration information is used to establish a real-time control transmission channel connecting the target network elements, and the real-time control transmission channel is used for transmission of real-time control information.

In a possible implementation, the transmission channel configuration information includes a transmission resource of the real-time control transmission channel and/or a transmission rate of the real-time control transmission channel.

Optionally, the transmission channel configuration information further includes address information of an upstream network element and/or a downstream network element corresponding to the target network element that receives the transmission channel configuration information. FIG. 1C is used as an example. If the DU 2, the RU 3, and the ALD 4 are target network elements, the DU 2 is a target real-time control network element, the RU 3 and the ALD 4 are target execution network elements, the DU 2 is connected to the RU 3 through an intermediate network element BRMU, and the RU3 is connected to the ALD 4 through an intermediate network element RAMU. Therefore, for the RU 3, a BRMU 2 is an upstream network element, and a RAMU 3 is a downstream network element. For the DU 2, the BRMU 2 is a downstream network element. For the ALD 4, the RAMU 3 is an upstream network element. It should be understood that, for a target network element, transmission channel configuration information corresponding to the target network element may include only address information of an upstream network element, and does not include address information of a downstream network element. For example, transmission channel configuration information corresponding to the ALD 4 in the foregoing example includes only address information of the upstream network element RAMU 3. Alternatively, transmission channel configuration information corresponding to the target network element includes only address information of a downstream network element, and does not include address information of an upstream network element. For example, transmission channel configuration information corresponding to the DU 2 in the foregoing example includes only address information of the downstream network element BRMU 2. Alternatively, transmission channel configuration information corresponding to the target network element includes address information of an upstream network element and address information of a downstream network element. For example, transmission channel configuration information corresponding to the RU 3 in the foregoing example includes address information of the upstream network element BRMU 2 and address information of the downstream network element RAMU 3. Optionally, the address information of the upstream network element includes a communication address and a communication port of the upstream network element, and the address information of the downstream network element includes a communication address and a communication port of the downstream network element.

In addition, for explanations of concepts such as the transmission resource, the transmission rate, the upstream network element, and the downstream network element, refer to the foregoing step 203. Details are not described herein again.

For ease of understanding of the transmission channel configuration information, FIG. 1C is still used as an example. It is assumed that the non-real-time control network element CU determines the DU 2 as a target real-time control network element, the RU 3 and the ALD 4 are target execution network elements, the BRMU 2 is an intermediate network element connecting the DU 2 and the RU 3, and the RAMU 3 is an intermediate network element connecting the RU 3 and the ALD 4. In this case, the CU separately sends, to the DU 2, the RU 3, and the ALD 4, transmission channel configuration information corresponding to the network elements. Transmission channel configuration information corresponding to the DU 2 is {transmission resource: time domain location 1 and frequency domain location 1; transmission rate: 800 M; address information of a downstream network element: address information of the BRMU 2}. Transmission channel configuration information corresponding to the RU 3 is {transmission resource: time domain location 1 and frequency domain location 1; transmission rate: 800 M; address information of an upstream network element: address information of the BRMU 2; address information of a downstream network element: address information of the RAMU 3}. Transmission channel configuration information corresponding to the ALD 4 is {transmission resource: time domain location 1 and a frequency domain location 1; transmission rate: 800 M; address information of an upstream network element: address information of the RAMU 3}.

Optionally, when the upstream network element or the downstream network element of the target network element is an intermediate network element, in addition to sending the transmission channel configuration information to the target network element, the non-real-time control network element further configures address information of the target network element for the upstream network element or the downstream network element connected to the target network element. For example, in the foregoing example, the non-real-time control network element CU further separately sends the address information of the intermediate network element, namely, the BRMU 2 to the DU 2 and the RU 3, and further separately sends the address information of the intermediate network element, namely, the RAMU 3 to the RU 3 and the ALD 4.

After receiving the transmission channel configuration information from the non-real-time control network element, the target real-time control network element can learn of an address of the target execution network element that needs to establish the real-time control transmission channel with the target real-time control network element. In addition, the target execution network element can learn of an address of the target real-time control network element that needs to establish the real-time control transmission channel with the target execution network element. Therefore, the target real-time control network element and the target execution network element can establish the real-time control transmission channel based on address information of a peer network element.

Step 304: The non-real-time control network element determines function configuration information of each target execution network element based on real-time control capability information of the target real-time control network element and real-time control capability information of the target execution network element.

The function configuration information is used by the target network element to enable various real-time control functions in the first function set.

It should be understood that, because the real-time control functions in the first function set are real-time control functions supported by both the target real-time control network element and the target execution network element, a performance parameter included in the configuration information is a performance parameter of the real-time control function supported by both the target real-time control network element and the target execution network element. For example, if the target real-time control network element and the target execution network element both support the function of real-time beam weight adjustment and the function of real-time power control, the configuration information sent by the non-real-time control network element to the target real-time control network element indicates the target real-time control network element to enable the function of real-time beam weight adjustment and the function of real-time power control, and the configuration information sent by the non-real-time control network element to the target execution network element indicates the target execution network element to enable the function of real-time beam weight adjustment and the function of real-time power control.

It should be further understood that, that the target network element enables a real-time control function may be understood as that the target network element enables or disables the real-time control function; or may be understood as that the target network element reads, when enabling the real-time control function, a performance parameter that is of the real-time control function and that is carried in the function configuration information, and determines that the target network element is allowed to use the performance parameter of the real-time control function.

Specifically, there may be a plurality of the following implementations of the function configuration information:

In a possible implementation, the function configuration information includes a performance parameter corresponding to at least one real-time control function, and each real-time control function corresponds to at least one performance parameter and/or an index of the at least one performance parameter.

In an implementation 1 of this implementation, the function configuration information includes performance parameters of various real-time control functions. In this case, the performance parameter of the real-time control function not only can be used as indication information for indicating the target network element to enable or disable the real-time control function, but also may indicate a performance parameter that the target network element is allowed to use when the target network element enables the real-time control function.

For example, when the function configuration information includes a performance parameter corresponding to a real-time control function, after the target network element receives the performance parameter of the real-time control function, the target network element can learn of a function indicated by the performance parameter of the real-time control function that needs to be enabled, and the performance parameter that is of the real-time control function and that is allowed to be used when the real-time control function is enabled.

For example, when the function configuration information includes the performance parameters of the real-time control functions, the function configuration information sent by the non-real-time control network element to the target real-time control network element and the target execution network element may be shown in Table 1-1 below.

**Table 1-1**

| Real-time control function | Performance parameters of the real-time control function | |
|---|---|---|
| Function of real-time beam weight adjustment | Quantity of channels | 16; 32 |
| | Quantity of phase shifters | 8; 16 |
| | Quantity of symbol switching times | 1 |
| | Phase shifter weight | Weight of a phase shifter 1 |
| | | Weight of a phase shifter 2 |
| | | Weight of a phase shifter 3 |
| | | ... |
| | | Weight of a phase shifter 15 |
| | | Weight of a phase shifter 16 |
| Function of real-time power control | Channel power adjustment step | 1 |
| | Maximum radio frequency power of a channel | 20; 40 |

In the example shown in Table 1-1, the target real-time control network element and the target execution network element both support the function of real-time beam weight adjustment and the function of real-time power control, and the function configuration information includes performance parameters of the function of real-time beam weight adjustment and performance parameters of the function of real-time power control. When the target network element (the target real-time control network element or the target execution network element) reads the performance parameters of the function of real-time beam weight adjustment in the function configuration information, the target network element enables the function of real-time beam weight adjustment. Similarly, when the target network element (the target real-time control network element or the target execution network element) reads the performance parameters of the function of real-time power control in the function configuration information, the target network element enables the function of real-time power control. For the function of real-time beam weight adjustment, the target real-time control network element and the target execution network element may both set 16 channels or 32 channels, may both set eight phase shifters or 16 phase shifters, and may both support four times of symbol switching. For the function of real-time power control, the target real-time control network element and the target execution network element may both support the channel power adjustment step of 1 dB, and may both support the maximum radio frequency power, of 20 W or 40 W, of the channel.

In this implementation 1, because the function configuration information includes the performance parameters of the real-time control functions, the target network element (the target real-time control network element and the target execution network element) can learn of a performance parameter that is allowed to be used when a real-time control function is enabled and a value of the performance parameter. This helps keep a value of a performance parameter of a real-time control function of the target real-time control network element consistent with a value of the performance parameter of the real-time control function of the target execution network element, to implement the real-time control function smoothly, and avoid a failure of implementing the real-time control function due to inconsistent performance parameters.

In an implementation 2 of this implementation, the function configuration information includes performance parameters of various real-time control functions and an index of the performance parameter. In this case, the performance parameter of the real-time control function can be used as indication information for indicating the target network element to enable or disable the real-time control function. Details are similar to those in the implementation 1, and are not described herein again.

Optionally, when a performance parameter of a real-time control function has a plurality of available values, the function configuration information further includes an index of the value of the performance parameter.

For example, when the function configuration information includes indexes of the performance parameters of the real-time control functions, the function configuration information sent by the non-real-time control network element to the target real-time control network element and the target execution network element may be shown in Table 1-2 below.

**Table 1-2**

| Real-time control function | Performance parameters of the real-time control function | | Indexes of the performance parameters of the real-time control function |
|---|---|---|---|
| Function of real-time beam weight adjustment | Quantity of channels | 16 | 1.1.1 |
| | | 32 | 1.1.2 |
| | Quantity of phase shifters | 8 | 1.2.1 |
| | | 16 | 1.2.2 |
| | Quantity of symbol switching times | 1 | 1.3.1/1.3 |
| | Phase shifter weight | Weight of a phase shifter 1 | 1.4.1 |
| | | Weight of a phase shifter 2 | 1.4.2 |
| | | Weight of a phase shifter 3 | 1.4.3 |
| | | ... | ... |
| | | Weight of a phase shifter 16 | 1.4.6 |
| Function of real-time power control | Channel power adjustment step | 1 | 2.1.1/2.1 |
| | Maximum radio frequency power of a channel | 20 | 2.2.1 |
| | | 40 | 2.2.2 |

In the example shown in Table 1-2, in addition to content listed in Table 1-1, the index of the value of each performance parameter is further included, and each index can uniquely identify a value of a performance parameter of a real-time control function. Optionally, the index may include three digits. The first digit represents a type of a real-time control function, the second digit represents a type of a performance parameter of the real-time control function indicated by the first digit, and the third digit represents a specific value of the performance parameter indicated by the second digit. For example, the index "1.1.1" indicates that a first value of the performance parameter "the quantity of channels" of the function of real-time beam weight adjustment is 16, and the index "1.1.2" indicates that a second value of the performance parameter "the quantity of channels" of the function of real-time beam weight adjustment is 32. For another example, the index "1.3.1" indicates a value of the performance parameter "the quantity of symbol switching times" of the function of real-time beam weight adjustment is 1.

It should be noted that when a performance parameter has only one value, an index of the performance parameter may indicate the value of the performance parameter. For example, the performance parameter "the quantity of symbol switching times" of the function of real-time beam weight adjustment has only one value, and the index "1.3" may indicate that a value of the performance parameter "the quantity of symbol switching times" of the function of real-time beam weight adjustment is 1.

It should be understood that when a performance parameter has only a small quantity of values (for example, a performance parameter has only one or two values), the function configuration information may not include an index of the performance parameter. For example, in this case, the function configuration information sent by the non-real-time control network element to the target real-time control network element and the target execution network element may be shown in Table 1-3 below.

**Table 1-3**

| Real-time control function | Performance parameters of the real-time control function | | Indexes of some performance parameters of the real-time control function |
|---|---|---|---|
| Function of real-time beam weight adjustment | Quantity of channels | 16 | - |
| | | 32 | - |
| | Quantity of phase shifters | 8 | - |
| | | 16 | - |
| | Quantity of symbol switching times | 1 | - |
| | Phase shifter weight | Weight of a phase shifter 1 | 0 |
| | | Weight of a phase shifter 2 | 1 |
| | | Weight of a phase shifter 3 | 2 |
| | | ... | ... |
| | | Weight of a phase shifter 16 | 15 |
| Function of real-time power control | Channel power adjustment step | 1 | - |
| | Maximum radio | 20 | - |
| | frequency power of a channel | 40 | - |

In the example shown in Table 1-3, in addition to the content listed in Table 1-1, indexes of values of some performance parameters (for example, the phase shifter weight) are further included, and each index can uniquely identify a value of a performance parameter of a real-time control function. An index of another performance parameter may not be set.

In this implementation 2, the function configuration information not only includes the performance parameters of the real-time control functions, but also includes the indexes of the performance parameters. Therefore, the target network element (the target real-time control network element and the target execution network element) can accurately determine value ranges of performance parameters when a real-time control function is enabled, and the target real-time control network element can use the indexes of the performance parameters to replace the performance parameters when exchanging real-time control information with the target execution network element. Therefore, this not only helps implement the real-time control function smoothly, but also helps reduce a byte size of the control information carried when the target real-time control network element interacts with the target execution network element, to save transmission resources for transmitting the real-time control information.

In an implementation 3 of this implementation, the function configuration information includes indexes of performance parameters of various real-time control functions. In this case, the target real-time control network element and the target execution network element have agreed on a correspondence between an index of a performance parameter and the performance parameter, that is, the target network element (for example, the target real-time control network element and the target execution network element) can determine the performance parameter based on the index of the performance parameter.

In addition, the index of the performance parameter of the real-time control function may also be used as indication information for indicating the target network element to enable or disable the real-time control function. To be specific, when the target network element (the target real-time control network element or the target execution network element) reads the index of the performance parameter in the function configuration information, the target network element first determines the performance parameter based on the index of the performance parameter, and then enables the real-time control function corresponding to the performance parameter.

For example, when the function configuration information includes the indexes of the performance parameters of the real-time control functions, the function configuration information sent by the non-real-time control network element to the target real-time control network element and the target execution network element may be shown in Table 1-4 below.

**Table 1-4**

| Real-time control function | Indexes of performance parameters of the real-time control function |
|---|---|
| Function of real-time beam weight adjustment | 1.1.1 |
| | 1.1.2 |
| | 1.2.1 |
| | 1.2.2 |
| | 1.3.1/1.3 |
| | 1.4.1 |
| | 1.4.2 |
| | 1.4.3 |
| | ... |
| | 1.4.6 |
| Function of real-time power control | 2.1.1/2.1 |
| | 2.2.1 |
| | 2.2.2 |

In the example shown in Table 1-4, the configuration information is the index of the performance parameter of each real-time control function, and each index can uniquely identify a value of a performance parameter of a real-time control function.

In this implementation 3, because the target real-time control network element and the target execution network element may agree on the correspondence between the index of the performance parameter and the performance parameter in advance, the target real-time control network element may replace the performance parameter with the index of the performance parameter when exchanging real-time control information with the target execution network element. Therefore, this not only helps implement the real-time control function smoothly, but also helps reduce a byte size of the control information carried when the target real-time control network element interacts with the target execution network element, to save transmission resources for transmitting the real-time control information.

In another possible implementation, in addition to the performance parameter and/or the index of the performance parameter, the function configuration information further includes enabling indication information of at least one real-time control function, and the enabling indication information indicates the target network element to enable or disable the real-time control function. In this case, the target network element is indicated to enable or disable the real-time control function by using the enabling indication information, and the performance parameter or the index of the performance parameter is not needed to implement an enabling effect. For example, the enable indication information includes two values. One value (for example, 1) represents enabling, and the other value (for example, 0) represents disabling.

It should be understood that, in this implementation, for an implementation of the performance parameter or the index of the performance parameter, refer to the examples shown in Table 1-1, Table 1-2, Table 1-3, and Table 1-4. Details are not listed one by one in this implementation.

In a possible example, the performance parameter in the function configuration information may be combined with the enabling indication information. For example, the performance parameter in the function configuration information and the enabling indication information are located in a same table. If the example shown in Table 1-1 is used for the performance parameter, the function configuration information may be shown in Table 1-5 below.

**Table 1-5**

| Enabling indication information | Real-time control function | Performance parameters of the real-time control function | |
|---|---|---|---|
| 1 | Function of real-time beam weight adjustment | Quantity of channels | 16 |
| | | | 32 |
| | | Quantity of phase shifters | 8 |
| | | | 16 |
| | | Quantity of symbol switching times | 4 |
| | | Phase shifter weight | Weight of a phase shifter 1 |
| | | | Weight of a phase shifter 2 |
| | | | Weight of a phase shifter 3 |
| | | | ... |
| | | | Weight of a phase shifter 16 |
| 0 | Function of real-time power control | Channel power adjustment step | 1 |
| | | Maximum radio frequency power of a channel | 20 |
| | | | 40 |

In the example shown in Table 1-5, in addition to the content listed in Table 1-1, the enabling indication information is further included. When a value of the enabling indication information is 1, it indicates that a real-time control function is to be enabled; or when a value of the enabling indication information is 0, it indicates that a real-time control function is to be disabled. For example, in the example shown in Table 1-5, it indicates that the function of real-time beam weight adjustment is to be enabled, or it indicates that the function of real-time power control is to be disabled.

In a possible example, the performance parameter in the function configuration information may be independent of the enabling indication information. For example, the performance parameter in the function configuration information and the enabling indication information are located in different tables. In this case, the enabling indication information may be shown in Table 2-1 below.

**Table 2-1**

| Real-time control function | Whether to enable the real-time control function |
|---|---|
| Function of real-time beam weight adjustment | 0/1 |
| Function of real-time subframe and/or symbol configuration adjustment | 0/1 |
| Function of real-time power control | 0/1 |
| Function of real-time intermediate radio frequency energy saving control | 0/1 |
| Real-time integrated access and backhaul IAB mode enabling | 0/1 |
| Function of real-time channel calibration | 0/1 |

In the example shown in Table 2-1, when a value of the enabling indication information is 1, it indicates that a real-time control function is to be enabled; or when a value of the enabling indication information is 0, it indicates that a real-time control function is to be disabled.

In this example, Table 2-1 may be combined with any one of the examples of Table 1-1, Table 1-2, Table 1-3, Table 1-4, and Table 1-5.

It should be understood that Table 1-1, Table 1-2, Table 1-3, Table 1-4, Table 1-5, and Table 2-1 are merely several possible examples of the function configuration information. In actual application, the function configuration information may further include more real-time control functions, and each real-time control function may further include more performance parameters or indexes of the performance parameters. A quantity of real-time control functions, performance parameters, or indexes of the performance parameters that are included in the function configuration information is not limited in this application.

Step 305a: The non-real-time control network element sends the function configuration information to the target real-time control network element; and correspondingly, the target real-time control network element receives the function configuration information from the non-real-time control network element.

It should be understood that after the target real-time control network element receives the function configuration information, the target real-time control network element can send real-time control information to the target execution network element based on the function configuration information. For details, refer to step 306.

For descriptions of the function configuration information, refer to detailed descriptions in the foregoing step 304. Details are not described herein again.

Step 305b: The non-real-time control network element sends the function configuration information to the target execution network element; and correspondingly, the target execution network element receives the function configuration information from the non-real-time control network element.

It should be understood that, after the target execution network element receives the function configuration information, the target execution network element can learn of a performance parameter that can be used by each real-time control function and a value of the performance parameter. However, a performance parameter of a real-time control function in the function configuration information may have at least two values. In this case, the target real-time control network element needs to indicate, via the real-time control information, the target execution network element to make a value of the performance parameter take effect. Specifically, the target real-time control network element performs step 306.

Step 306: The target real-time control network element sends the real-time control information to the target execution network element; and correspondingly, the target execution network element receives the real-time control information from the target real-time control network element.

The real-time control information is determined by the target real-time control network element based on the function configuration information received from the non-real-time control network element, and indicates to make a value of each performance parameter of a real-time control function take effect.

The real-time control information includes a value of each performance parameter indicated by the function configuration information.

In a possible implementation, the real-time control information includes a value of at least one performance parameter of a real-time control function, and the value of the at least one performance parameter is a to-be-effective value. For example, if the target real-time control network element needs to enable the function of real-time beam weight adjustment, the target real-time control network element needs to send, to the target execution network element, a value of each of at least one performance parameter of the function of real-time beam weight adjustment.

In another possible implementation, the real-time control information includes an index of a value of at least one performance parameter of a real-time control function. The function configuration information received by the target execution network element includes a correspondence between the index of the value of the performance parameter and the value of the performance parameter, or the target execution network element is configured with the correspondence between the index of the value of the performance parameter and the value of performance parameter. Therefore, when the target execution network element receives the value of the performance parameter, the target execution network element can determine the value of the performance parameter corresponding to the index, so that the value of the performance parameter takes effect.

It should be understood that, in actual application, the target real-time control network element may indicate the value of the performance parameter in any one of the foregoing implementations.

In addition, the real-time control information further includes address information of an upstream network element and/or address information of a downstream network element. The address information of the upstream network element includes a communication address and a communication port of the upstream network element, and the address information of the downstream network element includes a communication address and a communication port of the downstream network element.

Optionally, the real-time control information further includes type information of a real-time control function, and indicates a type that is of the real-time control function and that is currently transmitted by the real-time control information. For example, the type information may be a type of the function of real-time beam weight adjustment, a type of the function of real-time subframe and/or symbol configuration adjustment, a type of the function of real-time power control, a type of the function of real-time intermediate radio frequency energy saving control, a type of the function of real-time integrated access and backhaul IAB mode enabling, a type of the function of real-time channel calibration, and the like. This is not specifically limited herein.

Optionally, the real-time control information further includes an identifier of the real-time control information transmission channel, and indicates the transmission channel for transmitting the real-time control information. Because there may be a plurality of real-time control information transmission channels between network devices, that the real-time control information includes the transmission channel identifier helps accurately transmit the real-time control information from the target real-time control network element to the target execution network element.

In a possible implementation, the real-time control information may be included in a real-time control message. The real-time control message includes the following fields:
A start (START) field is used to carry a start flag of the real-time control message, to distinguish the real-time control message from other information. For example, when the real-time control information is carried in a payload of an underlying protocol message, the start flag is used to distinguish service data in the payload of the underlying protocol message from the real-time control message. For another example, when the real-time control information is carried in an extension message header of an underlying protocol message, the start flag is used to distinguish message header information in the extension message header of the underlying protocol message from the real-time control message.

A head (HEAD) field is used to carry information such as the address information of the upstream network element and/or the address information of the downstream network element, type information of the real-time control function, and the identifier of the real-time control information transmission channel.

The payload (PAYLOAD) field is used to carry the at least one performance parameter of the real-time control function and/or the index of the at least one performance parameter that are/is in the function configuration information. Generally, the performance parameter carried in the payload field varies according to the real-time control function.

A framecheck (FRAMECHECK) field is used to verify the real-time control message, so that the real-time control message can be aligned by byte. The FRAMECHECK field may be an optional field.

An end (END) field is used to carry an end flag of the real-time control message, to distinguish the real-time control message from other information. For example, when the real-time control information is carried in the payload of the underlying protocol message, the end flag is used to distinguish the service data in the payload of the underlying protocol message from the real-time control message. For another example, when the real-time control information is carried in the extension message header of the underlying protocol message, the end flag is used to distinguish the message header information in the extension message header of the underlying protocol message from the real-time control message. It should be understood that, when both the current start flag and end flag are located in the payload of the underlying protocol message, it indicates that the entire real-time control message is located in the payload of the underlying protocol message. When both the current start flag and end flag are located in the extension message header of the underlying protocol message, it indicates that the entire real-time control message is located in the extension message header of the underlying protocol message.

For example, the function of real-time beam weight adjustment is used as an example. If a payload of the real-time control message carries a value of a performance parameter, a sequence of the fields carried in the real-time control message and content of the fields may be shown in Table 3-1 below.

**Table 3-1**

| Field in a real-time control message | Field description |
|---|---|
| Start (START) (one byte) | A start flag of the real-time control message |
| Head (HEAD) (four bytes) | Address information of an upstream network element and/or address information of a downstream network element; type information of a real-time control function (indicating a function of real-time beam weight adjustment); an identifier of a real-time control information transmission channel |
| Payload (PAYLOAD) (a quantity of bytes is not limited) | A quantity of channels: 16; a quantity of phase shifters: 8; a quantity of symbol switching times: 1; phase shifter weight: a weight of a phase shifter 1; a weight of a phase shifter 2; ...; a weight of a phase shifter 8 |
| Framecheck (FRAMECHECK) (one byte) | A real-time control message verification field, aligned by byte |
| End (END) (one byte) | An end flag of the real-time control message |

In the example shown in Table 3-1, the real-time control information is carried in the real-time control message, and the payload field of the real-time control message includes a value of each performance parameter related to implementing the function of real-time beam weight adjustment. After the target execution network element receives the real-time control message, the target execution network element can implement the function of real-time beam weight adjustment based on the real-time control message. It should be understood that for a real-time control function, the target real-time control network element may send different real-time control messages to the target execution network element at different moments, and values of performance parameters in payloads carried in the different real-time control messages are different. For example, weights of phase shifters in the different real-time control messages are different, to implement a function of adjusting the weights of the phase shifters in real time.

For example, the function of real-time power control is used as an example. If a payload of the real-time control message carries a value of a performance parameter, a sequence of the fields carried in the real-time control message and content of the fields may be shown in Table 3-2 below.

**Table 3-2**

| Field in a real-time control message | Field description |
|---|---|
| Start (START) (one byte) | A start flag of the real-time control message |
| Head (HEAD) (four bytes) | Address information of an upstream network element and/or address information of a downstream network element; type information of a real-time control function (indicating a function of real-time power control); an identifier of a real-time control information transmission channel |
| Payload (PAYLOAD) (a quantity of bytes is not limited) | A power adjustment channel indication (for example, a BitMap mapping indication), indicating a channel that needs to be adjusted; An adjustment amount of a power adjustment channel (for example, an adjustment amount of a channel 1, ..., or an adjustment amount of a channel N) (N channels are used as an example) |
| Framecheck (FRAMECHECK) (one byte) | A real-time control message verification field, aligned by byte |
| End (END) (one byte) | An end flag of a real-time control message |

In the example shown in Table 3-2, the real-time control information is carried in the real-time control message, and the payload field of the real-time control message includes a value of each performance parameter related to implementing the function of real-time power control. After the target execution network element receives the real-time control message, the target execution network element can implement the function of real-time power control based on the real-time control message.

It should be understood that Table 3-1 and Table 3-2 are merely several possible examples of the real-time control message. In actual application, a message format and message content may be adjusted according to an actual transmission situation. For example, an encryption processing field is added, or some fields are deleted. This is not specifically limited herein.

Further, the real-time control message may be carried in the underlying protocol message.

In a possible implementation, the real-time control message is encapsulated in a data payload (payload) of the underlying protocol message, that is, the real-time control information may be transmitted as a part of the data payload of the underlying protocol message. In this case, the underlying protocol message includes an underlying protocol message header and the underlying protocol data payload, where the underlying protocol data payload includes the real-time control message. Optionally, an underlying protocol may be the common public radio interface (common public radio interface, CPRI) protocol, the similar CPRI (Similar CPRI, sCPRI) protocol, the enhanced common public radio interface (enhanced common public radio interface, eCPRI) protocol, the antenna interface standards group (antenna interface standards group, AISG) protocol, the Ethernet protocol, or the like. This is not specifically limited herein.

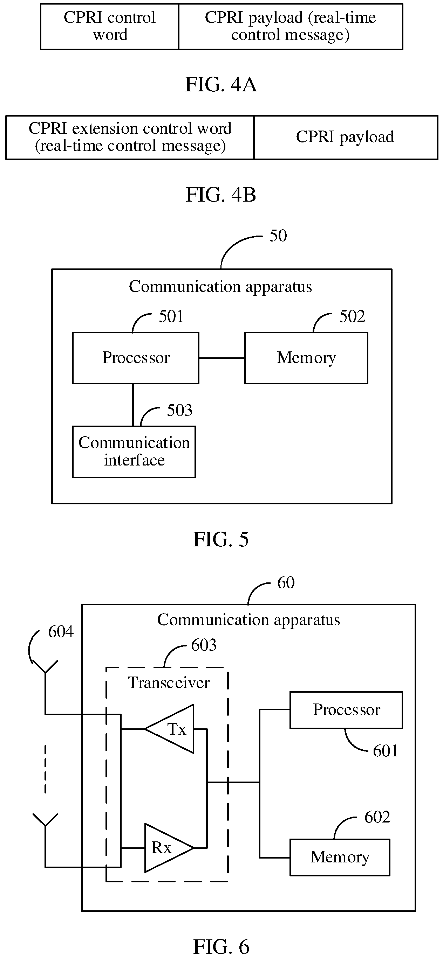

For example, that the real-time control message is transmitted based on the CPRI protocol is used as an example. A format of a CPRI protocol message carrying the real-time control message is shown in FIG. 4A. A CPRI control word represents a message header of the CPRI protocol message. The real-time control message is carried in a CPRI payload. It should be understood that the CPRI payload may further carry other information in addition to the real-time control message. This is not specifically limited herein.

In another possible implementation, the real-time control message is encapsulated in a message header of the underlying protocol message, namely, an extended protocol header of an underlying protocol, and the real-time control message is transmitted as an underlying control message. In this case, the underlying protocol message includes an extended underlying protocol message header and an underlying protocol data payload, where the extended underlying protocol message header includes the real-time control message. Optionally, the underlying protocol may be the CPRI protocol, the sCPRI protocol, the eCPRI protocol, the AISG protocol, the Ethernet protocol, or the like. This is not specifically limited herein.

For example, that the real-time control message is transmitted based on the CPRI protocol is used as an example. A format of a CPRI protocol message carrying the real-time control message is shown in FIG. 4B. A CPRI extension control word represents an extension message header of the CPRI protocol message. The real-time control message is carried in the CPRI extension control word. It should be understood that the CPRI payload may further carry other information in addition to the real-time control message. This is not specifically limited herein.

Step 307a: The target real-time control network element sends status information of the real-time control transmission channel to the non-real-time control network element; and correspondingly, the non-real-time control network element receives the status information of the real-time control transmission channel from the target real-time control network element.

Step 307b: The target execution network element sends the status information of the real-time control transmission channel to the target real-time control network element; and correspondingly, the target real-time control network element receives the status information of the real-time control transmission channel from the target execution network element.

In this embodiment, step 307b is an optional step.

The status information indicates a running status of the real-time control transmission channel. The running status of the real-time control transmission channel includes normal running or abnormal running. Optionally, the status information includes an address of a network element that reports the status information, a channel number of the real-time control transmission channel, a status value indicating that the channel is normal, and a status value indicating that the channel is abnormal. The address of the network element that reports the status information and the channel number of the real-time control transmission channel are used to determine a specific location of the real-time control transmission channel.

Optionally, the status information further includes delay information. The delay information indicates whether a delay occurs when the real-time control transmission channel transmits the real-time control information and indicates a value of the delay. Specifically, the intermediate network element in the real-time control transmission channel or the execution network element can determine the delay based on time domain resource information such as a frame index, a subframe index, a slot index, and a symbol index in the real-time control message. For example, error time Td is determined based on actual receiving time and standard receiving time, and when the error time Td is greater than a preset value, the error time Td is determined as the value of the delay.

In a possible implementation, the non-real-time control network element CU periodically sends a query message to a network element (that is, the target real-time control network element (for example, a DU) or the target execution network element (for example, an RU and an ALD)) through which the real-time control transmission channel passes, where the query message is used to query the status information of the real-time control transmission channel. Then, after receiving the query message, the network element feeds back the status information of the real-time control transmission channel to the non-real-time control network element CU.

In another possible implementation, a network element (that is, the target real-time control network element (for example, a DU) or the target execution network element (for example, an RU and an ALD)) through which the established real-time control transmission channel passes may periodically and actively report the status information of the real-time control transmission channel to the non-real-time control network element CU.

Step 308a: The non-real-time control network element manages the real-time control transmission channel based on the status information of the real-time control transmission channel.

Specifically, after receiving the status information of the real-time control transmission channel, the non-real-time control network element determines, based on the status information, to maintain, establish, reconfigure, or delete the real-time control transmission channel. For example, if the status information indicates that the status is normal, the non-real-time control network element continues to maintain the real-time control transmission channel; and if the status information indicates that the status is abnormal, the non-real-time control network element determines, based on a fault degree of the real-time control transmission channel, to reconfigure software for the real-time control transmission channel or directly delete the real-time control transmission channel.

Specifically, the non-real-time control network element may perform the following management on each target network element based on the status information.

In a possible implementation, when the status information indicates that a transmission resource is limited, the non-real-time control network element sends a transmission resource ratio to each target network element, where the transmission resource ratio indicates a ratio of a transmission resource occupied for transmitting the real-time control information to a transmission resource occupied for transmitting service data. Optionally, the transmission resource ratio sent by the non-real-time control network element is greater than an initial transmission resource ratio originally configured by the non-real-time control network element. To be specific, when the transmission resource is limited, the non-real-time control network element increases a quantity of transmission resources occupied for transmitting the real-time control information, and reduces a quantity of transmission resources occupied for transmitting the service data, to reserve more transmission resources for transmitting the real-time control information.

Optionally, the non-real-time control network element may further send data compression indication information to each target network element, where the data compression indication information indicates to compress to-be-transmitted service data, so that transmission resources reserved by compressing the data are reserved for the real-time control information. Optionally, the data compression indication information includes a compression ratio, and the compression ratio indicates a ratio of compressed data to the data before compression. For example, the compression ratio is 1/2 or 1/3. For example, if the compression ratio is 1/2, it indicates that a quantity of bits occupied by the compressed data is 1/2 of a quantity of bits occupied by the data before compression.

In a possible implementation, when the status information further includes the delay information, the non-real-time control network element indicates, based on the delay information, each network element (for example, the target real-time control network element, the target execution network element, and the intermediate network element) on the real-time control transmission channel to adjust a delay, so that each target network element on the real-time control transmission channel can adjust, based on indication, time for sending the real-time control information.

In a possible implementation, when the status information indicates that a serious fault occurs on the real-time control transmission channel, the non-real-time control network element sends a release message to each target network element, where the release message indicates to release the real-time control transmission channel, to save transmission resources and improve resource utilization of a base station system.

Step 308b: The target real-time control network element manages the real-time control transmission channel based on the status information of the real-time control transmission channel.

Step 308b is an optional step.

In a possible implementation, when the status information further includes the delay information, the target real-time control network element indicates, based on the delay information, each network element (including the target execution network element and/or the intermediate network element) on the real-time control transmission channel to adjust a delay, so that each target network element on the real-time control transmission channel can adjust, based on indication, time for sending the real-time control information.

In this embodiment, the non-real-time control network element can collect the real-time control capability information of the plurality of candidate network elements (that is, the real-time control capability information of the at least one candidate real-time control network element and the real-time control capability information of the at least one candidate execution network element) that are managed by the non-real-time control network element, and select, based on the real-time control capability information of the candidate network elements, the at least two target network elements (that is, the at least one target real-time control network element and the at least one target execution network element) that support one or more same real-time control functions. Then, the real-time control transmission channel is established based on the at least two target network elements, to transmit the real-time control information. Because each of the at least two target network elements supports at least one same real-time control function, the real-time control information sent by the target real-time control network element in the real-time control transmission channel established by the at least two target network elements can be identified by the target execution network element in the real-time control transmission channel. Therefore, a success rate of real-time control information transmission can be improved, and a real-time control processing capability of the base station system is improved.

FIG. 5 is a schematic diagram of a structure of a communication apparatus 50 according to this application. It should be understood that the control network element in the embodiment corresponding to FIG. 2, and the non-real-time control network element and the real-time control network element in the embodiment corresponding to FIG. 3 may all be based on the structure of the communication apparatus 50 shown in FIG. 5 in this embodiment. The communication apparatus 50 may be a network element or a device having a baseband signal processing function, or a device having a radio signal processing function for managing a radio access network RAN. For example, when the communication apparatus 50 performs the method embodiment corresponding to FIG. 2, the communication apparatus 50 may be a baseband processing unit BBU, a central unit CU, or a distributed unit DU in a base station system, or may be a combined structure of the CU and the DU. When the communication apparatus 50 performs the method of the non-real-time control network element in the method embodiment corresponding to FIG. 3, the communication apparatus 50 may be a CU. When the communication apparatus 50 performs the method of the real-time control network element in the method embodiment corresponding to FIG. 3, the communication apparatus 50 may be a DU. In actual application and subsequent network evolution, the communication apparatus 50 may alternatively be another network element or device having a real-time control processing function, or another device having the radio signal processing function for managing the radio access network RAN.

Specifically, the communication apparatus 50 includes at least one processor 501, at least one memory 502, and at least one communication interface 503. The processor 501, the memory 502, and the communication interface 503 are connected through a connection apparatus. The connection apparatus may include various types of interfaces, transmission cables, buses, or the like. This is not limited in this embodiment.

The memory 502 is mainly configured to store a software program and data. The memory 502 may exist independently, and is connected to the processor 501. Optionally, the memory 502 may be integrated with the processor 501, for example, integrated into one or more chips. The memory 502 can store program code for performing the technical solutions in embodiments of this application, and the processor 501 controls execution of the program code. Various types of executed computer program code may also be considered as drivers of the processor 501. It should be understood that FIG. 5 in this embodiment shows only one memory and one processor. However, in actual application, the communication apparatus 50 may include a plurality of processors or a plurality of memories. This is not specifically limited herein. In addition, the memory 502 may also be referred to as a storage medium, a storage device, or the like. The memory 502 may be a storage element (namely, an on-chip storage element) located in a same chip as the processor, or may be an independent storage element. This is not limited in this embodiment of this application.

In this embodiment, the communication interface 503 is configured to receive a digital baseband signal or a digital intermediate frequency signal from a radio unit (for example, the execution network element described above), and provide the digital baseband signal or the digital intermediate frequency signal to the processor 501, so that the processor 501 performs further processing, for example, demodulation processing and decoding processing, on the digital baseband signal or the digital intermediate frequency signal. The communication interface 503 may further send a digital baseband signal or a digital intermediate frequency signal to a radio unit (for example, the execution network element described above), so that the radio unit converts the modulated digital baseband signal or the modulated digital intermediate frequency signal into a radio frequency signal, and sends the radio frequency signal through one or more antennas. For example, the communication interface 503 may be a fronthaul interface such as an enhanced common public radio interface eCPRI or a common public radio interface CPRI.

Optionally, the communication interface 503 is further connected to an optical module (not shown in the figure), and the optical module is configured to convert a digital baseband signal generated by the communication apparatus 50 into an optical signal for transmission through an optical fiber. The optical module is further configured to receive an optical signal from another device (for example, the intermediate network element or the execution network element described above), and convert the optical signal into a digital baseband signal.

It should be understood that a combination structure of the communication interface 503 and the optical module may also be referred to as a transceiver unit, a transceiver, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitting machine, a transmitter, a transmitting circuit, or the like.

In addition, the processor 501 is mainly configured to process a communication protocol and communication data, control an entire network device, execute a software program, and process data of the software program, for example, configured to support the communication apparatus 50 in performing an action described in the foregoing method embodiments. The communication apparatus 50 may include a baseband processor and a central processing unit. The baseband processor is mainly configured to process a communication protocol and communication data, and the central processing unit is mainly configured to control the entire communication apparatus 50, execute a software program, and process data of the software program. The processor 501 in FIG. 5 may integrate functions of the baseband processor and the central processing unit. A person skilled in the art may understand that the baseband processor and the central processing unit may alternatively be processors independent of each other, and are interconnected by using a technology such as a bus. A person skilled in the art may understand that the communication apparatus 50 may include a plurality of baseband processors to adapt to different network standards, the communication apparatus 50 may include a plurality of central processing units to enhance a processing capability of the communication apparatus 50, and components of the communication apparatus 50 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

Specifically, when the communication apparatus 50 performs the method of the control network element in the embodiment corresponding to FIG. 2, the communication apparatus 50 performs the following steps based on the program code stored in the memory 502.

The communication apparatus 50 receives real-time control capability information of each execution network element from the execution network element through the communication interface 503, where the real-time control capability information indicates performance parameters used by the execution network element to implement various real-time control functions. Then, the processor 501 determines at least one target network element from a plurality of execution network elements based on real-time control capability information of the plurality of execution network elements and real-time control capability information of the control network element. Each of the at least one target network element and the control network element both support each real-time control function in a first function set, and the first function set includes at least one real-time control function. Then, the communication apparatus 50 sends transmission channel configuration information to each of the at least one target network element through the communication interface 503. The transmission channel configuration information is used to establish a real-time control transmission channel connecting the control network element and the target network element, and the real-time control transmission channel is used for transmission of real-time control information.

Optionally, the first function set includes at least one of the following: a function of real-time beam weight adjustment, a function of real-time subframe and/or symbol configuration adjustment, a function of real-time power control, a function of real-time intermediate radio frequency energy saving control, a function of real-time integrated access and backhaul IAB mode enabling, and a function of real-time channel calibration.

Optionally, a non-empty intersection exists between a value of a performance parameter of a real-time control function indicated by the real-time control capability information of the control network element and a value of a performance parameter of the same real-time control function indicated by the real-time control capability information of the target network element.

Optionally, the transmission channel configuration information includes a transmission resource of the real-time control transmission channel and/or a transmission rate of the real-time control transmission channel.

In a possible implementation, the real-time control capability information includes upper and lower limits of a transmission rate supported by the execution network element. In this case, the processor 501 determines the transmission rate of the real-time control transmission channel based on the upper and lower limits of the transmission rate of the at least one target network element.

In a possible implementation, the processor 501 further determines function configuration information of each target network element based on the real-time control capability information of the at least one target network element, where the function configuration information is used to configure the real-time control functions in the first function set for the target network element. The communication interface 503 sends, to each target network element, the function configuration information corresponding to the target network element.

Optionally, the function configuration information includes a performance parameter corresponding to at least one real-time control function, and each real-time control function corresponds to at least one performance parameter and/or an index of the at least one performance parameter.

In a possible implementation, the communication apparatus 50 further sends the real-time control information to the target network element through the communication interface 503, where the real-time control information includes a value of each performance parameter indicated by the function configuration information.

In a possible implementation, the communication apparatus 50 further sends a transmission resource ratio to each target network element through the communication interface 503, where the transmission resource ratio indicates a ratio of a transmission resource occupied for transmitting the real-time control information to a transmission resource occupied for transmitting service data.

In a possible implementation, the communication apparatus 50 further obtains status information of the real-time control transmission channel through the communication interface 503, where the status information indicates a running status of the real-time control transmission channel. The processor 501 in the communication apparatus 50 further manages the real-time control transmission channel based on the status information.

Specifically, when the communication apparatus 50 performs the method of the non-real-time control network element in the embodiment corresponding to FIG. 3, the communication apparatus 50 performs the following steps based on the program code stored in the memory 502.

The communication apparatus 50 receives real-time control capability information of a candidate real-time control network element from the candidate real-time control network element through the communication interface 503, and receives real-time control capability information of a candidate execution network element from the candidate execution network element.

The processor 501 determines, based on real-time control capability information of at least one candidate real-time control network element and real-time control capability information of at least one candidate execution network element, at least one target real-time control network element and at least one target execution network element from the at least one candidate real-time control network element and the at least one candidate execution network element.

In addition, the communication apparatus 50 sends, to the target real-time control network element through the communication interface 503, transmission channel configuration information corresponding to the target real-time control network element, and sends, to the target execution network element, transmission channel configuration information corresponding to the target execution network element, so that the target real-time control network element and the target execution network element establish a real-time control transmission channel based on the transmission channel configuration information.

In a possible implementation, the processor 501 is further configured to determine function configuration information of each target execution network element based on real-time control capability information of the target real-time control network element and real-time control capability information of the target execution network element. Then, the communication apparatus 50 sends, to the target real-time control network element through the communication interface 503, function configuration information corresponding to the target real-time control network element, and sends, to the target execution network element, the function configuration information corresponding to the target execution network element.

Specifically, when the communication apparatus 50 performs the method of the real-time control network element in the embodiment corresponding to FIG. 3, the communication apparatus 50 performs the following steps based on the program code stored in the memory 502.

The communication apparatus 50 sends real-time control information to a target execution network element through the communication interface 503.

For others, refer to the method of the control network element in the embodiment corresponding to FIG. 2, or the method of the non-real-time control network element or the real-time control network element in the embodiment corresponding to FIG. 3. Details are not described herein again.

FIG. 6 is a schematic diagram of a structure of another communication apparatus 60 according to this application. It should be understood that the execution network element in the method embodiment corresponding to FIG. 2 or FIG. 3 may be based on the structure of the communication apparatus 60 in FIG. 6 in this embodiment. It should be understood that the communication apparatus 60 may be a radio unit or another processing apparatus that has a function of processing a radio signal (for example, an intermediate frequency signal or a radio frequency signal) in a base station system. For example, the communication apparatus 60 may be a remote radio unit RRU or a remote radio head RRH in the base station system. The RRU is generally used for conventional outdoor coverage of a macro base station, and the RRH is generally used for indoor coverage of an indoor distributed system. For example, in a 5G NR system, the communication apparatus 60 may alternatively be an active antenna unit AAU, that is, a processing unit that integrates an RRU (or an RRH) and an antenna device. In addition, the communication apparatus 60 may alternatively be an antenna device, for example, an antenna line device ALD. In actual application and subsequent network evolution, the wireless device may alternatively be another device or apparatus that has a function of receiving and sending a radio frequency signal, or processing a radio frequency signal or an intermediate frequency signal.

The communication apparatus 60 includes at least one processor 601, at least one memory 602, at least one transceiver 603, and one or more antennas 604. The processor 601, the memory 602, and the transceiver 603 are connected to each other through a connection apparatus, and the antenna 604 is connected to the transceiver 603. The connection apparatus may include various types of interfaces, transmission cables, buses, or the like. This is not limited in this embodiment.

The memory 602 is mainly configured to store a software program and data. The memory 602 may exist independently, and is connected to the processor 601. Optionally, the memory 602 may be integrated with the processor 601, for example, integrated into one or more chips. The memory 602 can store program code for performing the technical solutions in embodiments of this application, and the processor 601 controls execution of the program code. Various types of executed computer program code may also be considered as drivers of the processor 601. It should be understood that FIG. 6 in this embodiment shows only one memory and one processor. However, in actual application, the communication apparatus 60 may include a plurality of processors or a plurality of memories. This is not specifically limited herein. In addition, the memory 602 may also be referred to as a storage medium, a storage device, or the like. The memory 602 may be a storage element (namely, an on-chip storage element) located in a same chip as the processor, or may be an independent storage element. This is not limited in this embodiment of this application.

In this embodiment, the transceiver 603 may be configured to support receiving or sending of a radio frequency signal between the communication apparatus 60 and a terminal device, and the transceiver 603 may be connected to the antenna 604. The transceiver 603 includes a transmitter Tx and a receiver Rx. Specifically, one or more antennas 604 may receive a radio frequency signal. The receiver Rx of the transceiver 603 is configured to receive the radio frequency signal from the antenna 604, and convert the radio frequency signal into a digital baseband signal or a digital intermediate frequency signal, so that the digital baseband signal or the digital intermediate frequency signal is transmitted to a wireless device controller. In this way, the wireless device controller performs further processing, for example, demodulation processing and decoding processing, on the digital baseband signal or the digital intermediate frequency signal. In addition, the transmitter Tx in the transceiver 603 is further configured to: receive the modulated digital baseband signal or the modulated digital intermediate frequency signal from the wireless device controller, convert the modulated digital baseband signal or the modulated digital intermediate frequency signal into a radio frequency signal, and send the radio frequency signal through one or more antennas 604. Specifically, the receiver Rx may selectively perform one or more levels of frequency down-mixing processing and analog-to-digital conversion processing on the radio frequency signal, to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion on the modulated digital baseband signal or the modulated digital intermediate frequency signal, to obtain the radio frequency signal. A sequence of the frequency up-mixing processing and the digital-to-analog conversion processing is adjustable. The digital baseband signal and the digital intermediate frequency signal may be collectively referred to as a digital signal.

It should be understood that the transceiver 603 may also be referred to as a transceiver unit, a transceiver machine, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitting machine, a transmitter, a transmitting circuit, or the like.

In addition, the processor 601 is mainly configured to process a communication protocol and communication data, execute a software program, and process data of the software program, for example, configured to support the communication apparatus 60 in performing an action described in the foregoing embodiments. In a possible implementation, the communication apparatus 60 is configured to perform the method in the embodiment corresponding to FIG. 2 or FIG. 3.

Specifically, when the communication apparatus 60 performs the method in the embodiment corresponding to FIG. 2, the processor 601 in the communication apparatus 60 is configured to collect real-time control capability information of an execution network element. Then, the transceiver 603 in the communication apparatus 60 is configured to send the real-time control capability information of the execution network element to a control network element, where the real-time control capability information indicates performance parameters used by the execution network element to implement various real-time control functions. The transceiver 603 is further configured to: when the execution network element is determined as a target network element, receive transmission channel configuration information from the control network element. Then, the processor 601 in the communication apparatus 60 establishes, based on the transmission channel configuration information, a real-time control transmission channel connecting the control network element and the communication apparatus 60, where the real-time control transmission channel is used for transmission of real-time control information.

The control network element and the execution network element both support each real-time control function in a first function set, and the first function set includes at least one real-time control function.

Optionally, the first function set includes at least one of the following: a function of real-time beam weight adjustment, a function of real-time subframe and/or symbol configuration adjustment, a function of real-time power control, a function of real-time intermediate radio frequency energy saving control, a function of real-time IAB mode enabling, and a function of real-time channel calibration.

Optionally, a non-empty intersection exists between a value of a performance parameter of a real-time control function indicated by real-time control capability information of the control network element and a value of a performance parameter of the same real-time control function indicated by the real-time control capability information of the execution network element.

Optionally, the transmission channel configuration information includes a transmission resource of the real-time control transmission channel and/or a transmission rate of the real-time control transmission channel.

Optionally, the real-time control capability information includes upper and lower limits of a transmission rate supported by the execution network element, and the upper and lower limits of the transmission rate are used to determine the transmission rate of the real-time control transmission channel.

In a possible implementation, the transceiver 603 is further configured to receive, from the control network element, function configuration information corresponding to the execution network element, where the function configuration information is used to configure the real-time control functions in the first function set for the target network element.

In a possible implementation, the function configuration information includes a performance parameter corresponding to at least one real-time control function, and each real-time control function corresponds to at least one performance parameter and/or an index of the at least one performance parameter.

In a possible implementation, the transceiver 603 is further configured to receive the real-time control information from the control network element, where the real-time control information includes a value of each performance parameter indicated by the function configuration information.

In a possible implementation, the transceiver 603 is further configured to receive a transmission resource ratio from the control network element, where the transmission resource ratio indicates a ratio of a transmission resource occupied for transmitting the real-time control information to a transmission resource occupied for transmitting service data.

For others, refer to the method of the execution network element in the embodiment corresponding to FIG. 2 or FIG. 3. Details are not described herein again.

In an implementation process, the steps in the foregoing method can be implemented by using a hardware integrated logical circuit in the processor, or by using instructions in a form of software. The steps of the methods disclosed with reference to embodiments of this application may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again. It should be further understood that, "first", "second", "third", "fourth", and various numbers in this specification are merely used for differentiation for ease of description, and are not intended to limit the scope of embodiments of this application.

In addition, this application provides a computer program product, and the computer program product includes one or more computer instructions. When the computer program instructions are loaded and executed on a computer, the procedures or functions according to embodiments of this application are all or partially generated. For example, the method related to the control network element in FIG. 2 or FIG. 3 is implemented. For another example, the method related to the execution network element in FIG. 2 or FIG. 3 is implemented. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like.

In addition, this application further provides a computer-readable storage medium. The storage medium stores a computer program, and the computer program is executed by a processor to implement the method related to the control network element in FIG. 2 or FIG. 3.

In addition, this application further provides a computer-readable storage medium. The storage medium stores a computer program, and the computer program is executed by a processor to implement the method related to the execution network element in FIG. 2 or FIG. 3.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the spirit and scope of the technical solutions of embodiments of this application.

## Claims

1. A communication method, comprising:
obtaining, by a control network element, real-time control capability information of a plurality of execution network elements managed by the control network element, wherein the real-time control capability information indicates performance parameters used by the execution network element to implement various real-time control functions;
determining, by the control network element, at least one target network element from the plurality of execution network elements based on the real-time control capability information of the plurality of execution network elements and real-time control capability information of the control network element, wherein each of the at least one target network element and the control network element both support each real-time control function in a first function set, and the first function set comprises at least one real-time control function; and
sending, by the control network element, transmission channel configuration information to each of the at least one target network element, wherein the transmission channel configuration information is used to establish a real-time control transmission channel connecting the control network element and the target network element, and the real-time control transmission channel is used for transmission of real-time control information.

2. The method according to claim 1, wherein a non-empty intersection exists between a value of a performance parameter of a real-time control function indicated by the real-time control capability information of the control network element and a value of a performance parameter of the same real-time control function indicated by the real-time control capability information of the target network element.

3. The method according to claim 1 or 2, wherein the transmission channel configuration information comprises a transmission resource of the real-time control transmission channel and/or a transmission rate of the real-time control transmission channel.

4. The method according to claim 3, wherein the real-time control capability information comprises upper and lower limits of a transmission rate supported by the execution network element; and
before the sending, by the control network element, transmission channel configuration information to each of the at least one target network element, the method further comprises:
determining, by the control network element, the transmission rate of the real-time control transmission channel based on the upper and lower limits of the transmission rate of the at least one target network element.

5. The method according to any one of claims 1 to 4, wherein the method further comprises:
determining, by the control network element, function configuration information of each target network element based on the real-time control capability information of the at least one target network element, wherein the function configuration information is used to configure the real-time control functions in the first function set for the target network element; and
sending, by the control network element to each target network element, the function configuration information corresponding to the target network element.

6. The method according to claim 5, wherein the function configuration information comprises a performance parameter corresponding to the at least one real-time control function, and each real-time control function corresponds to at least one performance parameter and/or an index of the at least one performance parameter.

7. The method according to claim 6, wherein the method further comprises:
sending, by the control network element, the real-time control information to the target network element, wherein the real-time control information comprises a value of each performance parameter indicated by the function configuration information.

8. The method according to any one of claims 1 to 7, wherein the method further comprises:
sending, by the control network element, a transmission resource ratio to each target network element, wherein the transmission resource ratio indicates a ratio of a transmission resource occupied for transmitting the real-time control information to a transmission resource occupied for transmitting service data.

9. The method according to any one of claims 1 to 7, wherein the method further comprises:
obtaining, by the control network element, status information of the real-time control transmission channel, wherein the status information indicates a running status of the real-time control transmission channel; and
managing, by the control network element, the real-time control transmission channel based on the status information.

10. The method according to any one of claims 1 to 7, wherein the first function set comprises at least one of the following:
a function of real-time beam weight adjustment, a function of real-time subframe and/or symbol configuration adjustment, a function of real-time power control, a function of real-time intermediate radio frequency energy saving control, a function of real-time integrated access and backhaul IAB mode enabling, and a function of real-time channel calibration.

11. A communication method, comprising:
sending, by an execution network element, real-time control capability information of the execution network element to a control network element, wherein the real-time control capability information indicates performance parameters used by the execution network element to implement various real-time control functions; and
when the execution network element is determined as a target network element, receiving, by the execution network element, transmission channel configuration information from the control network element, wherein the transmission channel configuration information is used to establish a real-time control transmission channel connecting the control network element and the execution network element, the real-time control transmission channel is used for transmission of real-time control information, the control network element and the execution network element both support each real-time control function in a first function set, and the first function set comprises at least one real-time control function.

12. The method according to claim 11, wherein a non-empty intersection exists between a value of a performance parameter of a real-time control function indicated by real-time control capability information of the control network element and a value of a performance parameter of the same real-time control function indicated by the real-time control capability information of the execution network element.

13. The method according to claim 11 or 12, wherein the transmission channel configuration information comprises a transmission resource of the real-time control transmission channel and/or a transmission rate of the real-time control transmission channel.

14. The method according to claim 13, wherein the real-time control capability information comprises upper and lower limits of a transmission rate supported by the execution network element, and the upper and lower limits of the transmission rate are used to determine the transmission rate of the real-time control transmission channel.

15. The method according to any one of claims 11 to 14, wherein the method further comprises:
receiving, by the execution network element from the control network element, function configuration information corresponding to the execution network element, wherein the function configuration information is used to configure the real-time control functions in the first function set for the target network element.

16. The method according to claim 15, wherein the function configuration information comprises a performance parameter corresponding to the at least one real-time control function, and each real-time control function corresponds to at least one performance parameter and/or an index of the at least one performance parameter.

17. The method according to claim 16, wherein the method further comprises:
receiving, by the execution network element, the real-time control information from the control network element, wherein the real-time control information comprises a value of each performance parameter indicated by the function configuration information.

18. The method according to any one of claims 11 to 17, wherein the method further comprises:
receiving, by the execution network element, a transmission resource ratio from the control network element, wherein the transmission resource ratio indicates a ratio of a transmission resource occupied for transmitting the real-time control information to a transmission resource occupied for transmitting service data.

19. The method according to any one of claims 11 to 18, wherein the first function set comprises at least one of the following:
a function of real-time beam weight adjustment, a function of real-time subframe and/or symbol configuration adjustment, a function of real-time power control, a function of real-time intermediate radio frequency energy saving control, a function of real-time IAB mode enabling, and a function of real-time channel calibration.

20. A communication apparatus, comprising a processor and a memory, wherein
the memory stores a computer program, and
the processor invokes the computer program, to enable the communication apparatus to perform the method according to any one of claims 1 to 10.

21. A communication apparatus, comprising a processor and a memory, wherein
the memory stores a computer program, and
the processor invokes the computer program, to enable the communication apparatus to perform the method according to any one of claims 11 to 19.

22. A communication system, comprising:
a communication apparatus that performs the method according to any one of claims 1 to 10, and a communication apparatus that performs the method according to any one of claims 11 to 19.

23. A computer-readable storage medium, storing instructions, wherein when the instructions are run on a computer, the computer is enabled to perform the method according to any one of claims 1 to 10, or perform the method according to any one of claims 11 to 19.

24. A computer program product comprising instructions, wherein when the computer program product runs on a computer, the computer is enabled to perform the method according to any one of claims 1 to 10, or perform the method according to any one of claims 11 to 19.
